(19)

Europäisches
Patentamt
European
Patent Office
Office européen
des brevets

(11) **EP 4 575 893 A1**

(12) **EUROPEAN PATENT APPLICATION**

(43) Date of publication:
**25.06.2025 Bulletin 2025/26**

(21) Application number: **24220329.7**

(22) Date of filing: **16.12.2024**

(51) International Patent Classification (IPC):
**G06N 3/042** (2023.01)    **G06N 3/0464** (2023.01)
**G06N 3/048** (2023.01)    **G06N 3/063** (2023.01)

(52) Cooperative Patent Classification (CPC):
**G06N 3/042; G06N 3/0464; G06N 3/048;
G06N 3/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.12.2023 GB 202319567**

(71) Applicant: **Imagination Technologies Limited
Kings Langley, Hertfordshire WD4 8LZ (GB)**

(72) Inventors:
- **Schamp, Edward Jack Louis
  Kings Langley, WD4 8LZ (GB)**
- **Demirci, Gunduz Vehbi
  Kings Langley, WD4 8LZ (GB)**
- **Dikici, Cagatay
  Kings Langley, WD4 8LZ (GB)**

(74) Representative: **Slingsby Partners LLP
1 Kingsway
London WC2B 6AN (GB)**

(54) **GRAPH CONVOLUTIONAL NETWORKS**

(57)    There is provided a computer implemented method and a processing system for configuring a graph convolutional network (GCN). A GCN is received which comprises a GCN layer. The GCN layer is arranged to perform an operation in dependence on an adjacency matrix, a feature embedding matrix and a weight matrix. It is determined that the weight matrix comprises: (i) more rows than columns, or (ii) more columns than rows. In response to determining that the weight matrix comprises more rows than columns, the GCN is configured such that the GCN layer is configured to determine a first intermediate result representing a result of multiplying the feature embedding matrix and the weight matrix, and subsequently use the determined first intermediate result to determine a full result representing a result of multiplying the adjacency matrix, the feature embedding matrix and the weight matrix. In response to determining that the weight matrix comprises more columns than rows, the GCN is configured such that the GCN layer is configured to determine a second intermediate result representing a result of multiplying the adjacency matrix and the feature embedding matrix, and subsequently use the determined second intermediate result to determine the full result representing the result of multiplying the adjacency matrix, the feature embedding matrix and the weight matrix.

FIGURE 3

**Description**

CROSS-REFERENCE TO RELATED APPLICATION

This application claims priority from UK patent application 2319567.0 filed on 19 December 2023, which is herein incorporated by reference in its entirety.

TECHNICAL FIELD

The present disclosure is directed to graph convolutional networks (GCNs). In particular, the present disclosure relates to methods of, and processing systems for, configuring and/or compressing a graph convolutional network (GCN).

BACKGROUND

A neural network (NN) is a form of artificial network comprising a plurality of interconnected layers that can be used for machine learning applications. A graph convolutional network (GCN) is a type of neural network which comprises one or more GCN layers. A GCN can for example be used to: perform image processing (e.g. image classification); perform traffic forecasting (e.g. road traffic, air traffic and/or low-level satellite orbit traffic forecasting), provide recommendations (e.g. in online shopping, video streaming, social media and/or advertising applications), predict the function of proteins in protein synthesis applications, and/or control or assist in the control of a vehicle, such as an autonomous vehicle (e.g. by performing image processing as mentioned above to detect vehicle lane position and/or obstacles, e.g. to influence steering of the vehicle in real-time; and/or by performing traffic forecasting as mentioned above, e.g. to influence route planning for the vehicle in real-time). It will be appreciated that this is not an exhaustive list of applications for GCNs. The skilled person would understand how to configure a graph convolutional network to perform any of the processing techniques mentioned in this paragraph, and so for conciseness these techniques will not be discussed in any further detail.

A GCN layer uses an adjacency matrix (A), a feature embedding matrix (H) and a weight matrix (W). In particular, a GCN layer is typically arranged to perform multiplication of the A, H and W matrices (i.e. AxHxW). The same adjacency matrix (A) is used by each of the GCN layers of a GCN. The output of a GCN layer can be used to determine a feature embedding matrix (H') that is input to a subsequent GCN layer of the GCN. An activation function may be used to process the output of a first GCN layer to determine the feature embedding matrix for the next GCN layer. Typically, performing an activation operation will involve applying a non-linear activation function, e.g. using a rectified linear unit (ReLU). That 'next GCN layer' also performs a matrix multiplication operation of the adjacency matrix, a feature embedding matrix and a weight matrix. Although the same adjacency matrix (A) is used in each GCN layer, different GCN layers typically have different feature embedding matrices (e.g. the feature embedding matrix of one GCN layer is typically derived from the result of the previous GCN layer) and different weight matrices. The values of the elements of the weight matrices for the GCN layers of a GCN may be learnt during a process of training the GCN.

GCNs can become very large. For example, it is not unusual for the adjacency matrix, the feature embedding matrices and the weight matrices to each have millions or even billions of elements. For example, the adjacency matrix may be a 4096x4096 matrix, a feature embedding matrix for a GCN layer may be a 4096x512 matrix and the weight matrix for the GCN layer may be a 512x1024 matrix. Determining the result of multiplying the A, H and W matrices for this GCN layer would involve performing billions of multiply-accumulate (MAC) operations. Furthermore, there may be many GCN layers in the GCN. As such, implementing the GCN can involve performing a huge number of calculations. Furthermore, when implementing a GCN in hardware logic, at a neural network accelerator, the data representing the GCN is typically stored in an "off-chip" memory. The hardware logic can implement a GCN layer of the GCN by reading in the data representing that GCN layer at run-time. A large amount of memory bandwidth can be required in order to read in this data from an off-chip memory.

It is generally desirable to decrease the amount of data required to represent a GCN, decrease the power consumed when the GCN is implemented and/or decrease the latency (i.e. increase the speed) of implementing the GCN.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a computer implemented method of configuring a graph convolutional network, the method comprising:

receiving a graph convolutional network comprising a graph convolutional network layer, said graph convolutional network layer being arranged to perform an operation in dependence on an adjacency matrix, a feature embedding matrix and a weight matrix;

determining that the weight matrix comprises: (i) more rows than columns, or (ii) more columns than rows; and

in response to determining that the weight matrix comprises more rows than columns, configuring the graph convolutional network such that the graph convolutional network layer is configured to determine a first intermediate result representing a result of multiplying the feature embedding matrix and the weight matrix, and subsequently use the determined first intermediate result to determine a full result representing a result of multiplying the adjacency matrix, the feature embedding matrix and the weight matrix; or

in response to determining that the weight matrix comprises more columns than rows, configuring the graph convolutional network such that the graph convolutional network layer is configured to determine a second intermediate result representing a result of multiplying the adjacency matrix and the feature embedding matrix, and subsequently use the determined second intermediate result to determine the full result representing the result of multiplying the adjacency matrix, the feature embedding matrix and the weight matrix.

The adjacency matrix may have more elements than the feature embedding matrix and than the weight matrix.

The adjacency matrix may be a square matrix.

The graph convolutional network may comprise a plurality of graph convolutional network layers, the plurality of graph convolutional network layers comprising said graph convolutional network layer and one or more further graph convolutional network layers.

The method may further comprise, for each of the one or more further graph convolutional network layers:

determining that a weight matrix for the further graph convolutional network layer comprises: (i) more rows than columns, or (ii) more columns than rows; and

in response to determining that the weight matrix for the further graph convolutional network layer comprises more rows than columns, configuring the graph convolutional network such that the further graph convolutional network layer is configured to determine a first intermediate result for the further graph convolutional network layer representing a result of multiplying a feature embedding matrix for the further graph convolutional network layer and the weight matrix for the further graph convolutional network layer, and subsequently use the determined first intermediate result for the further graph convolutional network layer to determine a full result for the further graph convolutional network layer representing a result of multiplying an adjacency matrix, the feature embedding matrix and the weight matrix for the further graph convolutional network layer; or

in response to determining that the weight matrix for the further graph convolutional network layer comprises more columns than rows, configuring the graph convolutional network such that the further graph convolutional network layer is configured to determine a second intermediate result for the further graph convolutional network layer representing a result of multiplying the adjacency matrix for the further graph convolutional network layer and the feature embedding matrix for the further graph convolutional network layer, and subsequently use the determined second intermediate result for the further graph convolutional network layer to determine the full result for the further graph convolutional network layer representing the result of multiplying the adjacency matrix, the feature embedding matrix and the weight matrix for the further graph convolutional network layer.

For at least one of the plurality of graph convolutional network layers it may be determined that the weight matrix comprises more rows than columns, and for at least one other one of the plurality of graph convolutional network layers it may be determined that the weight matrix comprises more columns than rows.

The adjacency matrix may be the same for all of the plurality of graph convolutional network layers.

The method may further comprise configuring the graph convolutional network to process an output of a first of the graph convolutional network layers to determine a feature embedding matrix for a second of the graph convolutional network layers in the graph convolutional network. The processing of the output of the first of the graph convolutional network layers may comprise applying an activation function.

The processing of the output of the first of the graph convolutional network layers might not comprise performing a permute operation on the output of the first of the graph convolutional network layers.

The adjacency matrix may be represented with a set of one or more adjacency sub-matrices. The feature embedding matrix may be represented with a set of one or more feature embedding sub-matrices. The first intermediate result may be a first set of one or more intermediate sub-matrices and the second intermediate result may be a second set of one or more intermediate sub-matrices. Said configuring the graph convolutional network in response to determining that the weight matrix comprises more rows than columns may be such that the graph convolutional network layer is configured to determine the first set of one or more intermediate sub-matrices by multiplying the set of one or more feature embedding sub-matrices by the weight matrix, and subsequently use the determined first set of one or more intermediate sub-matrices to determine the full result by multiplying the set of one or more adjacency sub-matrices by the first set of one or more intermediate sub-matrices. Said configuring the graph convolutional network in response to determining that the weight matrix comprises more columns than rows may be such that the graph convolutional network layer is configured to determine the second set of one or more intermediate sub-matrices by multiplying the set of one or more adjacency sub-matrices by the set of one or more feature embedding sub-matrices, and subsequently use the determined second set of one or more intermediate sub-matrices to determine the full result by multiplying the second set of one or more intermediate sub-matrices by the weight matrix.

The first intermediate result may be a first intermediate matrix and the second intermediate result is a second intermediate matrix. Said configuring the graph convolutional network in response to determining that the weight matrix comprises more rows than columns may be such that the graph convolutional network layer is configured to determine the first intermediate matrix by multiplying the feature embedding matrix by the weight matrix, and subsequently use the determined first intermediate matrix to determine the full result by multiplying the adjacency matrix by the first intermediate matrix. Said configuring the graph convolutional network in response to determining that the weight matrix comprises more columns than rows may be such that the graph convolutional network layer is configured to determine the second intermediate matrix by multiplying the adjacency matrix by the feature embedding matrix, and subsequently use the determined second intermediate matrix to determine the full result by multiplying the second intermediate matrix by the weight matrix.

Said adjacency matrix may comprise a plurality of non-zero values and a plurality of zero values, and the method may further comprise compressing the graph convolutional network. Said compressing the graph convolutional network may comprise: rearranging the rows and columns of the adjacency matrix so as to gather the plurality of non-zero values of the adjacency matrix into a set of one or more adjacency sub-matrices, the set of one or more adjacency sub-matrices having a greater average density of non-zero values than the adjacency matrix; and outputting a compressed graph convolutional network comprising a compressed graph convolutional network layer arranged to perform a compressed operation in dependence on the set of one or more adjacency sub-matrices.

The set of one or more adjacency sub-matrices may comprise a subset of the values of the adjacency matrix. The graph convolutional network layer of the received graph convolutional network may be arranged to perform the operation by performing matrix multiplications using the adjacency matrix, the feature embedding matrix and the weight matrix. The compressed graph convolutional network layer of the compressed graph convolutional network may be arranged to perform the compressed operation by performing matrix multiplications using the set of one or more adjacency sub-matrices, a set of one or more feature embedding sub-matrices representing the feature embedding matrix, and the weight matrix.

If the weight matrix comprises more rows than columns, then the compressed graph convolutional network layer may be configured to multiply the set of one or more feature embedding sub-matrices by the weight matrix so as to form a first set of one or more intermediate sub-matrices, and subsequently multiply the set of one or more adjacency sub-matrices by the first set of one or more intermediate sub-matrices. If the weight matrix comprises more columns than rows, then the compressed graph convolutional network layer may be configured to multiply the set of one or more adjacency sub-matrices by the set of one or more feature embedding sub-matrices so as to form a second set of one or more intermediate sub-matrices, and subsequently multiply the second set of one or more intermediate sub-matrices by the weight matrix.

Said rearranging the rows and columns of the adjacency matrix may comprise: performing permutations of the rows and of the columns of the adjacency matrix; and partitioning the rows and columns of the permuted adjacency matrix to determine the set of one or more adjacency sub-matrices. Said performing permutations of the rows and of the columns of the adjacency matrix may comprise performing a symmetric permutation, and wherein the partitioning of the rows of the permuted adjacency matrix is the same as the partitioning of the columns of the permuted adjacency matrix.

The rows of the feature embedding matrix may be permuted and partitioned into a set of one or more feature embedding sub-matrices, wherein the permutation and partitioning of the rows of the feature embedding matrix match the permutation and partitioning of the columns of the adjacency matrix. It may be the case that the columns of the feature embedding matrix are neither permuted nor partitioned. It may be the case that the rows and the columns of the weight matrix are neither permuted nor partitioned.

Said rearranging the rows and columns of the adjacency matrix may convert the adjacency matrix into a doubly-bordered block-diagonal matrix form which comprises: (i) a plurality of block arrays which are aligned along the diagonal of the adjacency matrix, (ii) one or more horizontal border arrays which are horizontally aligned across the adjacency matrix, and (iii) one or more vertical border arrays which are vertically aligned across the adjacency matrix, wherein the block arrays, the one or more horizontal border arrays and the one or more vertical border arrays are adjacency sub-matrices.

Said rearranging the rows and columns of the adjacency matrix may be performed in dependence on a hypergraph model.

The method may further comprise storing the configured graph convolutional network for subsequent implementation.

The method may further comprise outputting a computer readable description of the configured graph convolutional network that, when implemented at a system for implementing a neural network, causes the configured graph convolutional network to be executed.

The method may further comprise configuring hardware logic to implement the configured graph convolutional network.

The hardware logic may comprise a neural network accelerator.

The method may further comprise using the configured graph convolutional network to perform one of: image processing, text processing, speech processing, traffic forecasting, lane detection, providing a recommendation to a user, molecular property prediction, prediction of a malicious user in a social network, and controlling or assisting in the control of a vehicle.

There is provided a processing system for configuring a graph convolutional network, the processing system comprising at least one processor configured to:

receive a graph convolutional network comprising a graph convolutional network layer, said graph convolutional network layer being arranged to perform an operation in dependence on an adjacency matrix, a feature embedding matrix and a weight matrix;

determine that the weight matrix comprises: (i) more rows than columns, or (ii) more columns than rows; and

in response to determining that the weight matrix comprises more rows than columns, configure the graph convolutional network such that the graph convolutional network layer is configured to determine a first intermediate result representing a result of multiplying the feature embedding matrix and the weight matrix, and subsequently use the determined first intermediate result to determine a full result representing a result of multiplying the adjacency matrix, the feature embedding matrix and the weight matrix; or

in response to determining that the weight matrix comprises more columns than rows, configure the graph convolutional network such that the graph convolutional network layer is configured to determine a second intermediate result representing a result of multiplying the adjacency matrix and the feature embedding matrix, and subsequently use the determined second intermediate result to determine the full result representing the result of multiplying the adjacency matrix, the feature embedding matrix and the weight matrix.

The processing system may further comprise a memory, wherein the at least one processor may be further configured to write the configured graph convolutional network into the memory for subsequent implementation.

The at least one processor may be further configured to configure hardware logic to implement the configured graph convolutional network.

There may be provided computer readable code configured to cause any of the methods described herein to be performed when the code is run.

There may be provided a computer readable storage medium having encoded thereon computer readable code configured to cause any of the methods described herein to be performed when the code is run.

There may be provided a computer implemented method of configuring a neural network, the method comprising:

receiving a neural network comprising a layer, said layer being arranged to perform a matrix multiplication operation comprising a first matrix, a second matrix and a third matrix;

determining an aspect ratio of at least one of the first matrix, the second matrix and the third matrix;

determining, in dependence on the determined aspect ratio, an optimal order in which to multiply the first matrix, the second matrix and the third matrix so as to perform the matrix multiplication operation; and

configuring the neural network such that the layer is configured to perform the matrix multiplication operation in accordance with the determined optimal order.

There may be provided a processing system for configuring a neural network, the processing system comprising at least one processor configured to:

receive a neural network comprising a layer, said layer being arranged to perform a matrix multiplication operation comprising a first matrix, a second matrix and a third matrix;

determine an aspect ratio of at least one of the first matrix, the second matrix and the third matrix;

determine, in dependence on the determined aspect ratio, an optimal order in which to multiply the first matrix, the second matrix and the third matrix so as to perform the matrix multiplication operation; and

configure the neural network such that the layer is configured to perform the matrix multiplication operation in accordance with the determined optimal order.

There may be provided a computer implemented method of compressing a graph convolutional network, the method comprising:

receiving a graph convolutional network comprising a graph convolutional network layer, said graph convolutional network layer being arranged to perform an operation in dependence on an adjacency matrix, said adjacency matrix comprising a plurality of non-zero values and a plurality of zero values;

rearranging the rows and columns of the adjacency matrix so as to gather the plurality of non-zero values of the adjacency matrix into a set of one or more adjacency sub-matrices, the set of one or more adjacency sub-matrices having a greater average density of non-zero values than the adjacency matrix; and

outputting a compressed graph convolutional network comprising a compressed graph convolutional network layer arranged to perform a compressed operation in dependence on the set of one or more adjacency sub-matrices.

Each of the one or more adjacency sub-matrices may have a greater average density of non-zero values than the adjacency matrix.
The graph convolutional network layer may be arranged to perform an operation in dependence on the adjacency matrix, a feature embedding matrix and a weight matrix.
The compressed graph convolutional network layer may be arranged to output a result representing a result of multiplying the adjacency matrix, the feature embedding matrix and the weight matrix.
The set of one or more adjacency sub-matrices may comprise a subset of the values of the adjacency matrix. The graph convolutional network layer of the received graph convolutional network may be arranged to perform the operation by performing matrix multiplications using the adjacency matrix, the feature embedding matrix and the weight matrix. The compressed graph convolutional network layer of the compressed graph convolutional network may be arranged to perform the compressed operation by performing matrix multiplications using the set of one or more adjacency sub-matrices, a set of one or more feature embedding sub-matrices representing the feature embedding matrix, and the weight matrix.
The adjacency matrix may have more elements than the feature embedding matrix and than the weight matrix.
A set of one or more feature embedding sub-matrices may represent the feature embedding matrix. The method may further comprise:

determining that the weight matrix comprises: (i) more rows than columns, or (ii) more columns than rows; and

in response to determining that the weight matrix comprises more rows than columns, configuring the compressed graph convolutional network such that the compressed graph convolutional network layer is configured to multiply the set of one or more feature embedding sub-matrices by the weight matrix so as to form a first set of one or more intermediate sub-matrices, and subsequently multiply the set of one or more adjacency sub-matrices by the first set of one or more intermediate sub-matrices; or

in response to determining that the weight matrix comprises more columns than rows, configuring the compressed graph convolutional network such that the compressed graph convolutional network layer is configured to multiply the set of one or more adjacency sub-matrices by the set of one or more feature embedding sub-matrices so as to form a second set of one or more intermediate sub-matrices, and subsequently multiply the second set of one or more intermediate sub-matrices by the weight matrix.

The adjacency matrix may be a square matrix.

Said rearranging the rows and columns of the adjacency matrix may comprise: performing permutations of the rows and of the columns of the adjacency matrix; and partitioning the rows and columns of the permuted adjacency matrix to determine the set of one or more adjacency sub-matrices.

Said performing permutations of the rows and of the columns of the adjacency matrix may comprise performing a symmetric permutation, wherein the partitioning of the rows of the permuted adjacency matrix may be the same as the partitioning of the columns of the permuted adjacency matrix.

The rows of the feature embedding matrix may be permuted and partitioned into a set of one or more feature embedding sub-matrices. The permutation and partitioning of the rows of the feature embedding matrix may match the permutation and partitioning of the columns of the adjacency matrix.

It may be the case that the columns of the feature embedding matrix are neither permuted nor partitioned, and the rows and the columns of the weight matrix are neither permuted nor partitioned.

Said rearranging the rows and columns of the adjacency matrix may convert the adjacency matrix into a doubly-bordered block-diagonal matrix form which comprises: (i) a plurality of block arrays which are aligned along the diagonal of the adjacency matrix, (ii) one or more horizontal border arrays which are horizontally aligned across the adjacency matrix, and (iii) one or more vertical border arrays which are vertically aligned across the adjacency matrix. The block arrays, the one or more horizontal border arrays and the one or more vertical border arrays are adjacency sub-matrices.

Said rearranging the rows and columns of the adjacency matrix may be performed in dependence on a hypergraph model.

Said rearranging the rows and columns of the adjacency matrix, $A$, may comprise:

determining a symmetric adjacency matrix, $A'$, such that, for each of the values, $A[i,j]$, of the adjacency matrix:

if $A[i,j] = 0$ and $A[j,i] \neq 0$, the corresponding value of the symmetric adjacency matrix, $A'[i,j]$, is non-zero, and

if $A[i,j] \neq 0$ or $A[j,i] = 0$, the corresponding value of the symmetric adjacency matrix, $A'[i,j]$, is equal to $A[i,j]$;

using the hypergraph model to reorder and partition the rows and columns of the symmetric adjacency matrix into a singly-bordered block-diagonal matrix form which comprises one or more initial border arrays which are either horizontally or vertically aligned across the symmetric adjacency matrix;

if the one or more initial border arrays are horizontally aligned across the symmetric adjacency matrix, applying the row ordering to the columns of the singly-bordered block diagonal matrix to thereby determine the adjacency matrix in the doubly-bordered block-diagonal matrix form; and

if the one or more initial border arrays are vertically aligned across the symmetric adjacency matrix, applying the column ordering to the rows of the singly-bordered block diagonal matrix to thereby determine the adjacency matrix in the doubly-bordered block-diagonal matrix form.

Said rearranging the rows and columns of the adjacency matrix, A, may further comprise, if a value of the adjacency matrix was altered to determine the symmetric adjacency matrix, returning that value to zero in the adjacency matrix in the doubly-bordered block-diagonal matrix form.

Said rearranging the rows and columns of the adjacency matrix may be performed by finding vertex separators on a net intersection graph of the hypergraph model.

The graph convolutional network may comprise a plurality of graph convolutional network layers, the plurality of graph convolutional network layers comprising said graph convolutional network layer and one or more further graph convolutional network layers. The compressed graph convolutional network may comprise a plurality of compressed graph convolutional network layers, the plurality of compressed graph convolutional network layers comprising said compressed graph convolutional network layer and one or more further compressed graph convolutional network layers.

The adjacency matrix may be the same for all of the plurality of graph convolutional network layers, and the one or more adjacency sub-matrices may be the same for all of the plurality of compressed graph convolutional network layers.

The compressed graph convolutional network may be configured to process an output of a first of the compressed graph convolutional network layers to determine an input for a second of the compressed graph convolutional network layers in the compressed graph convolutional network. It may be the case that the processing of the output of the first of the compressed graph convolutional network layers does not comprise performing a permute operation on the output of the first of the compressed graph convolutional network layers.

The processing of the output of the first of the compressed graph convolutional network layers may comprise applying an activation function.

The input for the second of the compressed graph convolutional network layers may be a set of one or more feature embedding sub-matrices representing a feature embedding matrix for the second of the compressed graph convolutional network layers.

The compressed graph convolutional network may be configured to permute an output of a final compressed graph convolutional network layer to reverse the permutation caused by said rearranging of the rows and columns of the adjacency matrix.

The method may further comprise storing the compressed graph convolutional network for subsequent implementation.

The method may further comprise outputting a computer readable description of the compressed graph convolutional network that, when implemented at a system for implementing a neural network, causes the compressed graph convolutional network to be executed.

The method may further comprise configuring hardware logic to implement the compressed graph convolutional network.

The method may comprise using the compressed graph convolutional network to perform one of: image processing, text processing, speech processing, traffic forecasting, lane detection, providing a recommendation to a user, molecular property prediction, prediction of a malicious user in a social network, and controlling or assisting in the control of a vehicle.

There may be provided a processing system for compressing a graph convolutional network, the processing system comprising at least one processor configured to:

receive a graph convolutional network comprising a graph convolutional network layer, said graph convolutional network layer being arranged to perform an operation in dependence on an adjacency matrix, said adjacency matrix comprising a plurality of non-zero values and a plurality of zero values;

rearrange the rows and columns of the adjacency matrix so as to gather the plurality of non-zero values of the adjacency matrix into a set of one or more adjacency sub-matrices, the set of one or more adjacency sub-matrices having a greater average density of non-zero values than the adjacency matrix; and

output a compressed graph convolutional network comprising a compressed graph convolutional network layer arranged to perform a compressed operation in dependence on the set of one or more adjacency sub-matrices.

The processing system may further comprise a memory, wherein the at least one processor is further configured to write the compressed graph convolutional network into the memory for subsequent implementation.

There may be provided computer readable code configured to cause any of the methods described herein to be performed when the code is run.

There may be provided a computer readable storage medium having encoded thereon computer readable code configured to cause any of the methods described herein to be performed when the code is run.

The processing system may be embodied in hardware on an integrated circuit. There may be provided a method of manufacturing, at an integrated circuit manufacturing system, a processing system. There may be provided an integrated circuit definition dataset that, when processed in an integrated circuit manufacturing system, configures the system to manufacture a processing system. There may be provided a non-transitory computer readable storage medium having stored thereon a computer readable description of a processing system that, when processed in an integrated circuit manufacturing system, causes the integrated circuit manufacturing system to manufacture an integrated circuit embodying a processing system.

There may be provided an integrated circuit manufacturing system comprising: a non-transitory computer readable storage medium having stored thereon a computer readable description of the processing system; a layout processing system configured to process the computer readable description so as to generate a circuit layout description of an integrated circuit embodying the processing system; and an integrated circuit generation system configured to manufacture the processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1A shows an example graph;

Figure 1B shows an example feature embedding matrix (H);

Figure 1C shows an example adjacency matrix and a normalised adjacency matrix;

Figure 2 illustrates the matrix multiplication performed by a GCN layer;

Figure 3 illustrates a GCN comprising two GCN layers;

Figure 4 shows a processing system for compressing and/or configuring a GCN and a system for implementing the GCN;

Figure 5 is a flow chart for a method of configuring a GCN;

Figure 6 shows different options for the order in which the adjacency matrix, the feature embedding matrix and the weight matrix are multiplied in a GCN layer, for both the situation in which the weight matrix is wide and the situation in which the weight matrix is tall;

Figure 7 is a flow chart for a method of compressing a GCN;

Figure 8A shows an example adjacency matrix comprising a plurality of elements representative of non-zero values and a plurality of elements representative of zero values;

Figure 8B shows an example hypergraph model corresponding to the adjacency matrix shown in Figure 8A;

Figure 8C shows an example rearranged adjacency matrix comprising a plurality of adjacency sub-matrices;

Figure 9 shows how a compressed operation can be performed by a compressed GCN layer using a plurality of sub-matrices;

Figure 10 is a flow chart for a method of configuring and compressing a GCN;

Figure 11 shows a system for implementing the GCN comprising a neural network accelerator;

Figure 12 shows a computer system in which a processing system is implemented; and

Figure 13 shows an integrated circuit manufacturing system for generating an integrated circuit embodying a processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

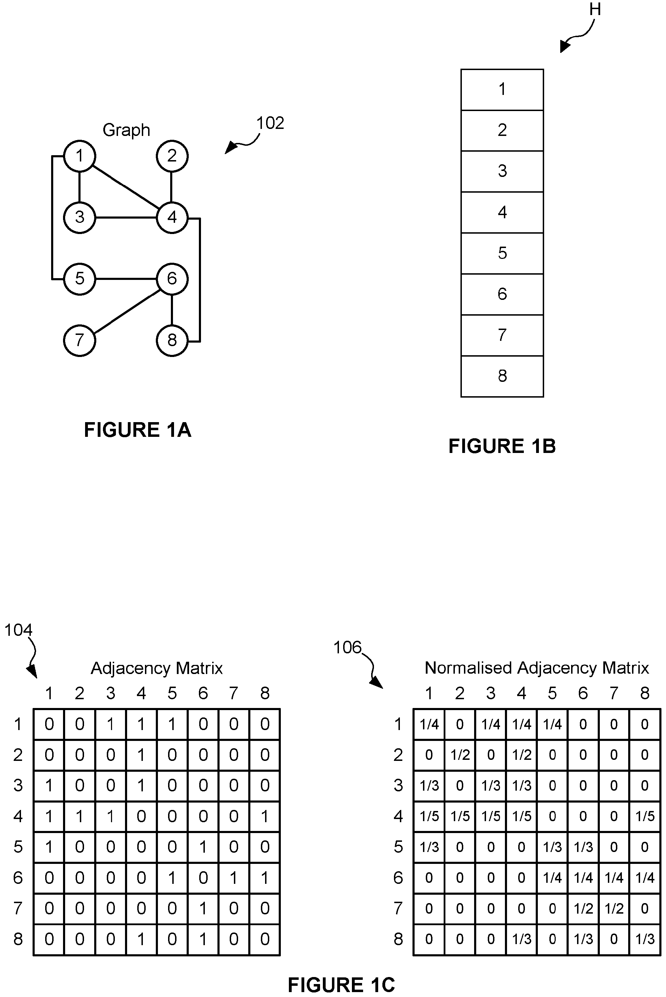

As described above, a graph convolutional network (GCN) comprises one or more GCN layers, where a GCN layer is typically arranged to perform multiplication of an adjacency matrix (A), a feature embedding matrix (H) and a weight matrix (W), i.e. the GCN layer is configured to determine a result of AxHxW. The feature embedding matrix (H) of a GCN layer in a GCN represents features comprised by the nodes of a graph. The feature embedding matrix of the first GCN layer is the input to the GCN. As described above, the same adjacency matrix is used for each of the GCN layers in a GCN, where the adjacency matrix (A) represents the connectivity between the nodes of the graph. A graph is a useful structure for representing relationships between objects. Graph data may be encountered in a multitude of real-world scenarios, such as social and computer networks, chemical structures of molecules, natural language processing, and image recognition, to name a few. The adjacency matrix and the feature embedding matrix can be understood further with reference to Figures 1A to 1C.

Figure 1A shows an example graph 102. The graph 102 comprises eight nodes, labelled 1 to 8 in Figure 1A. Each node comprises one or more features, which describe the properties of that node. Edges connect some pairs of the nodes 1-8. For example, node 1 is connected to nodes 3, 4 and 5 by respective edges. The edges shown in Figure 1A are undirected. That is, the graph shown in Figure 1A is undirected. An undirected edge between node n and node m represents that: node n is connected to node $m$; and node $m$ is connected to node n. For example, the undirected edge between nodes 1 and 3 represents that: node 1 is connected to node 3; and node 3 is connected to node 1. Some pairs of nodes are not connected to each other. For example, node 1 is not connected to node 2. That is, no edge exists between nodes 1 and 2. The graph shown in Figure 1A is provided by way of example only. In other examples the graph may be a directed graph, in which edges link nodes asymmetrically, e.g. a first node may be connected to a second node, but the second node might not be connected to the first node. It is to be understood that the graphs operated on by typical GCNs often comprise a far greater number of nodes than in the example shown in Figure 1A (e.g. thousands of nodes).

The nodes of the graph 102 contain different features, each of which describes a property of the node. The features of each node that are relevant for a GCN layer may be represented using a feature embedding matrix (H) for the GCN layer. Figure 1B shows an example feature embedding matrix (H). The feature embedding matrix (H) has the dimensions $N \times F$, where $N$ is the number of nodes in the graph represented by the feature embedding matrix (H) and $F$ is the number of features comprised by each node that are used by a GCN layer. The feature embedding matrix (H) shown in Figure 1B represents the features comprised by the nodes of the graph shown in Figure 1A. That is, the feature embedding matrix (H) comprises eight rows - labelled 1 to 8. Each of the rows (e.g. rows 1-8 shown in Figure 1B) of the feature embedding matrix (H) represents the features comprised by a respective one of the nodes (e.g. nodes 1-8 in Figure 1A) of the graph. Each of said features can be represented by a row-vector comprising one or more values. For example, each node may comprise $F$ features - and so would be representable by a row-vector comprising $F$ values. In this example, the feature embedding matrix (H) would comprise $F$ columns.

Figure 1C shows an example adjacency matrix 104 and a normalised adjacency matrix 106. The adjacency matrix 104 has the dimensions $N \times N$. The adjacency matrix 104 represents the connectivity between the nodes of the graph 102. As such, the adjacency matrix 104 comprises eight rows and eight columns, both labelled 1 to 8 in Figure 1C. Each of the rows (e.g. rows 1 to 8 in Figure 1C) of the adjacency matrix 104 represents a respective one of the nodes of the graph 102 represented by the adjacency matrix 104. Likewise, each of columns (e.g. columns 1 to 8 in Figure 1C) of the adjacency matrix 104 represents a respective one of the nodes of the graph 102 represented by the adjacency matrix 104. For this reason, the adjacency matrix 104 is a square matrix.

The adjacency matrix 104 comprises a plurality of elements, where each element corresponds to a respective pair of nodes of the graph 102. Each element of the adjacency matrix 104 representative of a pair of connected graph nodes comprises a first value (e.g. a value of "1" as shown in the example in Figure 1C). To be more specific, with reference to the example shown in Figure 1C, a one (i.e. "1") value in the (row, column) position $(n, m)$ of the adjacency matrix 104 represents a connection between node $n$ and node $m$ of the graph 102. For example, the "1" shown in the (row, column) position (1, 3) of the adjacency matrix 104 is representative of the connection between nodes 1 and 3 of the graph 102. Similarly, the "1" shown in the (row, column) position (3, 1) of the adjacency matrix 104 is representative of the connection between nodes 3 and 1 of the graph 102.

In contrast, each element of the adjacency matrix 104 representative of a pair of graph nodes that are not connected to each other comprises a second value (e.g. a value of "0" as shown in the example in Figure 1C). The second value is different to the first value. To be more specific, with reference to the example shown in Figure 1C, a zero (i.e. "0") value in the (row, column) position $(n, m)$ of the adjacency matrix 104 represents that node $n$ is not connected to node $m$ of the graph 102. For example, the "0" shown in the (row, column) position (1, 2) of the adjacency matrix 104 is representative of node 1 not being connected to node 2 in the graph 102. Similarly, the "0" shown in the (row, column) position (5, 3) of the adjacency matrix 104 is representative of node 5 not being connected to node 3 in the graph 102.

As will be understood from the preceding paragraphs, an adjacency matrix (A) that represents an undirected graph, such as graph 102, will necessarily be symmetric (i.e. $A^T=A$). That is, the adjacency matrix (A) 104 is symmetric across the diagonal, such that the value in the (row, column) position $(n, m)$ is necessarily equal the value in the (row, column) position $(m, n)$. It is to be understood that, in other examples (not shown in the Figures), it is possible for edges in a graph to be directed. For example, a directed edge from a node $n$ to a node $m$ would represent that node $n$ is connected to node $m$. However, in the absence of a directed edge from node $m$ to node $n$, node $m$ is not connected to node $n$. Graphs that use directed edges are referred to herein as directed graphs. An adjacency matrix that represents a directed graph will not necessarily be symmetric - e.g. as the value in the (row, column) position $(n, m)$ is not necessarily equal the value in the (row, column) position $(m, n)$.

Figure 1C also shows a normalised adjacency matrix 106, which is a normalised version of the adjacency matrix 104. To determine the normalised adjacency matrix 106, the identity matrix, $I$, is added to the adjacency matrix 104 to include the context of each node in its position in the adjacency matrix 104. Then each row of the matrix is normalised, e.g. by dividing each value in the row by the sum of the values of the row. Where the "adjacency matrix" is referred to herein, it is to be understood that this may be a reference to a normalised adjacency matrix or an unnormalized adjacency matrix.

The coefficients of the weight matrix (W) are used to transform the data input to a GCN layer. The coefficients of the weight matrix (W) can be defined during a training phase. That is, as would be understood by the skilled person, a GCN can be trained by, iteratively: processing training data in a forward pass; assessing the accuracy of the output of that forward pass; and updating the weight coefficients of the GCN layers in a backward pass.

Each GCN layer in a GCN uses the same adjacency matrix, but may use a feature embedding matrix which describes a different number of features. Therefore, $N$ is the same for each GCN layer of a GCN, but the value of $F$ may be different for different GCN layers. For example, the feature embedding matrix for a first GCN layer may have dimensions $N \times F$, and the feature embedding matrix for the next GCN layer may have dimensions $N \times F'$. In this case, the weight matrix (W) of the first GCN layer has the dimensions $F \times F'$. In this way, the width (e.g. number of columns) of the weight matrix (W) controls the width of the output from the first GCN layer so that it has dimensions $N \times F'$, and can be used as the feature embedding matrix for the next GCN layer without altering its dimensions.

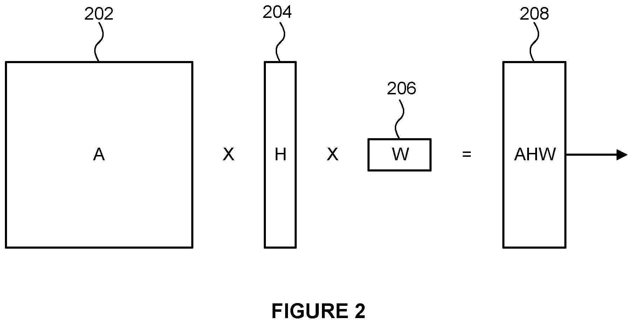

Figure 2 illustrates a matrix multiplication performed by a GCN layer. In particular, the GCN layer is configured to determine the result of multiplying the adjacency matrix (A) 202, which is a $N \times N$ square matrix, the feature embedding matrix (H) 204, which is a $N \times F$ matrix, and the weight matrix (W) 206, which is a $F \times F'$ matrix. The result of the multiplication is a $N \times F'$ matrix (AHW) 208. The adjacency matrix 202 has more elements than the feature embedding matrix 204 and than the weight matrix 206. To give some example numbers, $N$ may be 4096, $F$ may be 512 and $F'$ may be 1024, such that the adjacency matrix 202 has 16,777,216 elements, the feature embedding matrix 204 has 2,097,152 elements, the weight matrix 206 has 524,288 elements, and the result matrix 208 has 4,194,304 elements. These numbers are given just by way of example to illustrate that the adjacency matrix often has significantly more elements than the feature embedding matrix and than the weight matrix.

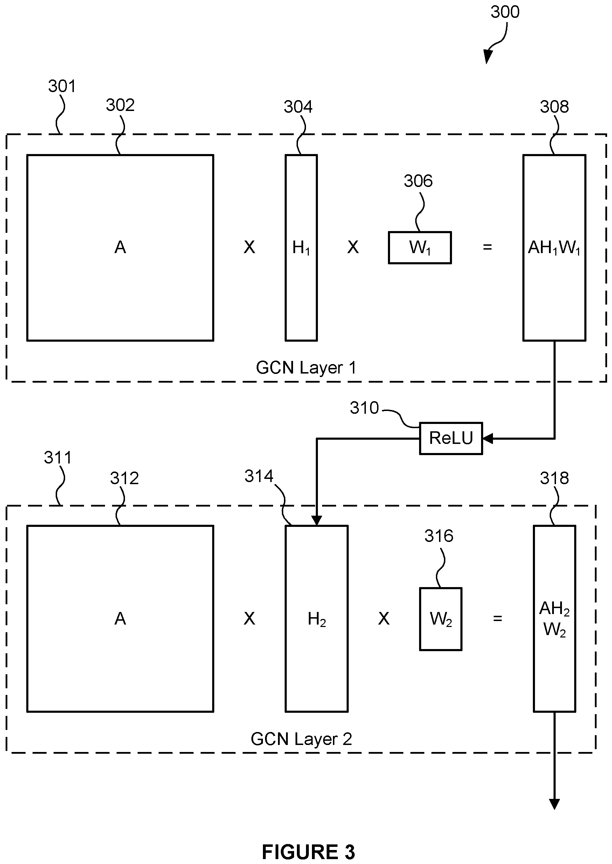

Figure 3 illustrates a GCN 300 comprising two GCN layers 301 and 311. Having multiple GCN layers in a GCN tends to increase the network's ability to provide useful predictions. Each of the GCN layers in a GCN contain the same operators, but may use different matrices (in particular different feature embedding matrices and different weight matrices may be used in different GCN layers). The output of one GCN layer in a GCN is used to derive the input (e.g. the feature embedding matrix) for the next GCN layer in the GCN. In the example shown in Figure 3, the first GCN layer 301 is configured to determine the result of multiplying an adjacency matrix (A) 302, a first feature embedding matrix ($H_1$) 304 and a first weight matrix ($W_1$) 306. The result of the multiplication ($AH_1W_1$) 308 is output from the first GCN layer 301. The second GCN layer 311 is configured to determine the result of multiplying an adjacency matrix (A) 312, a second feature embedding matrix ($H_2$) 314 and a second weight matrix ($W_2$) 316. The result of the multiplication ($A_2W_2$) 318 is output from the second GCN layer 311. The two GCN layers 301 and 311 use the same adjacency matrix (A), i.e. the adjacency matrix 302 is the same as the adjacency matrix 312. It is noted that in other examples, a GCN may comprise more than two GCN layers.

The GCN 300 comprises activation logic 310. The GCN 300 is configured to process the output 308 of the first GCN layer 301 to determine the feature embedding matrix ($H_2$) for the second GCN layer 311. In particular, the processing of the output 308 of the first GCN layer 301 comprises applying an activation function using the activation logic 310. For example, as shown in Figure 3, the activation logic 310 may be a rectified linear unit (ReLU). The processing of the output 308 of the first GCN layer 301 might comprise only applying the activation function, i.e. it might be the case that no other processing is performed on the output 308 of the first GCN layer 301 in order to determine the feature embedding matrix ($H_2$) for the second GCN layer 311. In particular, the processing of the output 308 of the first GCN layer 301 does not comprise performing a permute operation on the output 308 of the first GCN layer 301. The dimensions of the matrix 308 are not altered by the processing, such that the dimensions of the matrix 308 are the same as the dimensions of the feature embedding matrix ($H_2$) for the second GCN layer 311. Furthermore, the ordering of the rows and columns of the matrix 308 is not altered by the processing, such that the ordering of the rows and columns of the matrix 308 is the same as the ordering of the rows and columns of the feature embedding matrix ($H_2$) for the second GCN layer 311.

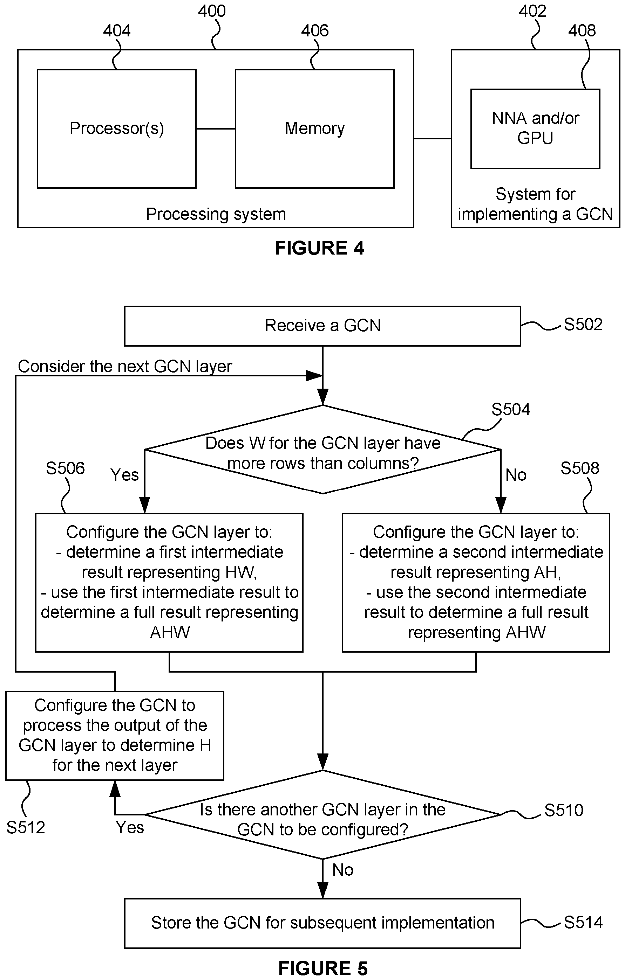

Figure 4 shows a processing system 400 for compressing and/or configuring a graph convolutional network (GCN) in accordance with the principles described herein. Processing system 400 comprises at least one processor 404 and a memory 406.

The at least one processor 404 may be implemented in hardware, software, or any combination thereof. The at least one processor 404 may be a microprocessor, a controller or any other suitable type of processor for processing computer executable instructions. The at least one processor 404 can be configured to perform a method of compressing and/or configuring a graph convolutional network (GCN) in accordance with the principles described herein (e.g. one or more of the methods as will be described herein with reference to Figures 5, 7 and 10).

Memory 406 is accessible to the at least one processor 404. Memory 406 may be a system memory accessible to the at least one processor 404 over a data bus. The at least one processor 404 may be implemented on a chip (e.g.

semiconductor die and/or integrated circuit package) and memory 406 may not be physically located on the same chip as the at least one processor 404. As such, memory 406 may be referred to as "off-chip memory" and/or "external memory". Alternatively, the at least one processor 404 may be implemented on a chip (e.g. semiconductor die and/or integrated circuit package) and memory 406 may be physically located on the same chip as the at least one processor 404. As such, memory 406 may be referred to as "on-chip memory" and/or "local memory". Alternatively again, memory 406 shown in Figure 4 may represent any combination of "on-chip" and "off-chip" memories - e.g. one or more "on-chip" memories and one or more "off-chip" memories arranged in a memory hierarchy.

Memory 406 may store computer executable instructions for performing a method of compressing and/or configuring a graph convolutional network (GCN) in accordance with the principles described herein (e.g. one or more of the methods as will be described herein with reference to Figures 5, 7 and 10). Memory 406 may store a GCN received at the processing system 400 to be compressed and/or configured (e.g. a software model defining that GCN, as described herein). Memory 406 may store a compressed and/or configured GCN output as a result of the at least one processor executing the computer executable instructions stored by the memory 406. Memory 406 may store that compressed and/or configured GCN for subsequent implementation (e.g. at a system for implementing a GCN).

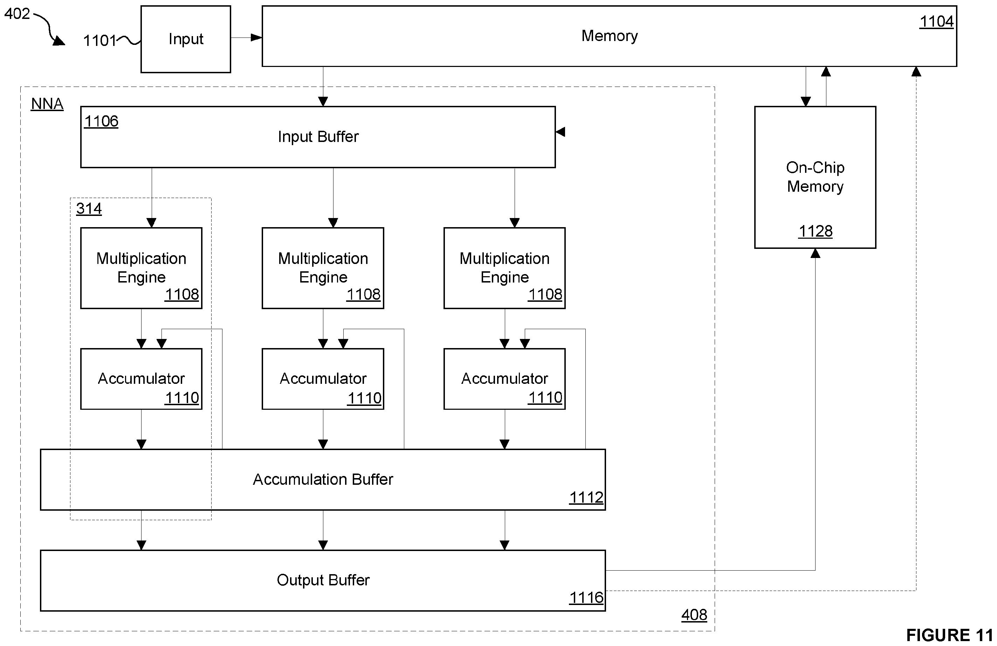

Processing system 400 can be used to configure a system 402 for implementing a graph convolutional network (GCN). The system 402 shown in Figure 4 may have the same properties as the system described below with reference to Figure 11. In particular, system 402 may comprise hardware logic 408 for implementing a GCN, said hardware logic comprising a neural network accelerator (NNA) and/or a graphics processing unit (GPU). The at least one processor 404 may configure the hardware logic 408 to implement a compressed and/or configured graph convolutional network (GCN) output as a result of the at least one processor performing a method of compressing and/or configuring a graph convolutional network (GCN) in accordance with the principles described herein (e.g. one or more of the methods as will be described herein with reference to Figures 5, 7 and 10).

Figure 5 is a flow chart for a method of configuring a graph convolutional network (GCN). The method of configuring a GCN shown in Figure 5 is a computer-implemented method. In particular, the method shown in Figure 5 is performed by the at least one processor 404. In step S502, the processor(s) 404 receives a GCN comprising one or more GCN layers. The received GCN may be a trained GCN. That is, as would be understood by the skilled person, the received GCN may have previously been trained by iteratively: processing training data in a forward pass; assessing the accuracy of the output of that forward pass; and updating coefficients of the GCN layers (e.g. updating the values in the weight matrices of the GCN layers) in a backward pass. As described above, each of the one or more GCN layers of the GCN is arranged to perform an operation in dependence on an adjacency matrix, a feature embedding matrix and a weight matrix. Where we describe "receiving a GCN" herein it is to be understood that this is intended to cover receiving data defining the GCN. The data defining the GCN comprises data defining the adjacency matrix (A), data defining the weight matrix (W) for each of the one or more GCN layers, and data defining any other components of the GCN such as activation functions to be implemented between consecutive GCN layers in the GCN.

Steps S504 to S512 are performed for each of the one or more GCN layers in the GCN. As described above, each of the one or more GCN layers of the GCN is arranged to perform a matrix multiplication operation ($A \times H \times W$) using the adjacency matrix (A), a feature embedding matrix (H) and a weight matrix (W). The matrix multiplication of these three matrices can be performed either as: (i) AxH, and then (AH)xW; or (ii) HxW, and then $A \times (HW)$. The result of the matrix multiplication of the three matrices will be the same whether the multiplication order is as given in (i) above or as given in (ii) above. The multiplication order does not affect the result because there is no "non-linearity" throughout the matrix multiplications performed in a GCN layer. In other words, a matrix multiplication operation is associative.

Although the result is not affected by the multiplication order, the amount of work involved in determining the result may be affected by the multiplication order. In particular, the number of multiply-accumulate (MAC) operations that are performed in order to determine the result of the multiplication of the three matrices ($A \times H \times W$) may depend upon whether the matrix multiplication of the three matrices is performed either as: (i) AxH, and then (AH)xW; or (ii) HxW, and then Ax(HW). Generally, reducing the amount of work that is performed (e.g. reducing the number of MAC operations that are performed) provides for a more efficient implementation of the GCN.

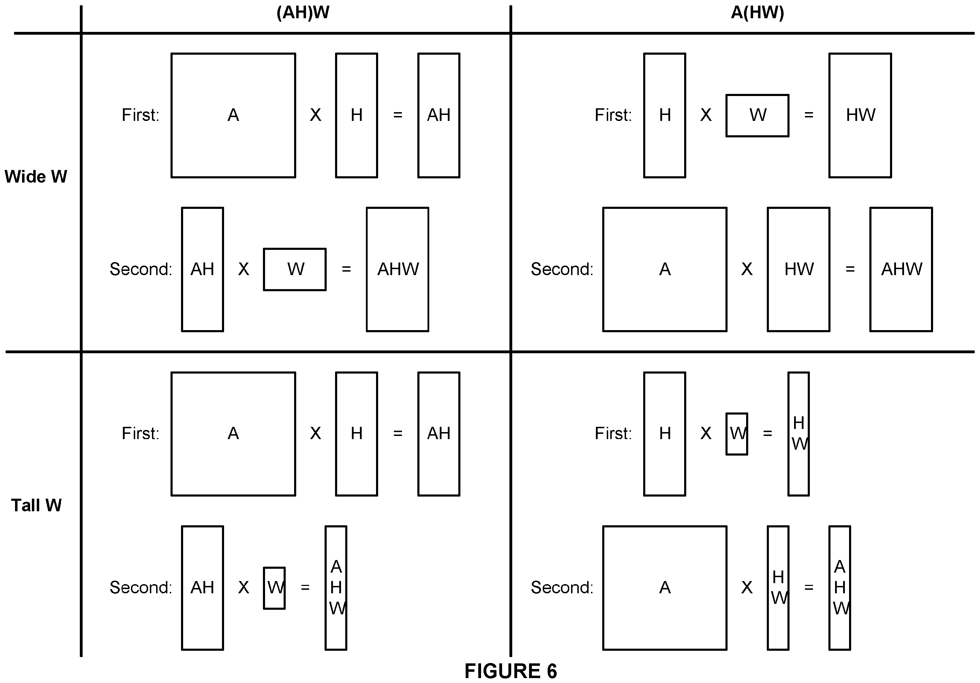

The multiplication order that involves fewer MAC operations depends on the relative row/column dimensions of the weight matrix (W) for the GCN layer. As described in detail below with reference to Figure 6, if W is "tall" (i.e. if it has more rows than columns) the optimal order is order (ii), i.e. perform HxW, and then Ax(HW). In contrast, if W is "wide" (i.e. if it has more columns than rows) the optimal order is order (i), i.e. perform AxH, and then (AH)xW.

In step S504, for one of the GCN layers (e.g. for the first GCN layer), the processor(s) 404 determines whether the weight matrix for the GCN layer comprises more rows than columns. If it is determined that the weight matrix for the GCN layer comprises more rows than columns then the method passes to step S506. If it is determined that the weight matrix for the GCN layer comprises more columns than rows then the method passes to step S508. In the example shown in Figure 5, if the weight matrix for the GCN layer comprises the same number of rows and columns (i.e. if W is a square matrix) then the method passes to step S508. However, in other examples, step S504 may have involved determining whether the weight matrix for the GCN layer comprises more columns than rows, and in those examples if the weight matrix for the GCN layer comprises the same number of rows and columns (i.e. if W is a square matrix) then the method would pass to step S506. It is noted that if the weight matrix for the GCN layer comprises the same number of rows and columns then the number of MAC operations performed to determine the result (AxHxW) is the same irrespective of whether the multiplication order is (i) AxH and then (AH)xW, or (ii) HxW and then Ax(HW).

In step S506, in response to determining in step S504 that the weight matrix comprises more rows than columns, the processor(s) 404 configures the GCN such that the GCN layer is configured to determine a first intermediate result (HW) representing a result of multiplying the feature embedding matrix (H) and the weight matrix (W), and subsequently use the determined first intermediate result (HW) to determine a full result (AHW) representing a result of multiplying the adjacency matrix, the feature embedding matrix and the weight matrix. For example, in step S506, in response to determining that the weight matrix comprises more rows than columns (i.e. that the weight matrix is tall), the GCN layer is configured to multiply a set of one or more matrices representing the feature embedding matrix by the weight matrix so as to form a set of one or more first intermediate matrices, and subsequently multiply a set of one or more matrices representing the adjacency matrix by the set of one or more first intermediate matrices. Following step S506 the method passes to step S510, such that step S508 is not performed if the weight matrix comprises more rows than columns.

In step S508, in response to determining in step S504 that the weight matrix comprises more columns than rows, the processor(s) 404 configures the GCN such that the GCN layer is configured to determine a second intermediate result (AH) representing a result of multiplying the adjacency matrix (A) and the feature embedding matrix (H), and subsequently use the determined second intermediate result (AH) to determine the full result (AHW) representing the result of multiplying the adjacency matrix, the feature embedding matrix and the weight matrix. For example, in step S508, in response to determining that the weight matrix comprises more columns than rows (i.e. that the weight matrix is wide), the GCN layer is configured to multiply the set of one or more matrices representing the adjacency matrix by the set of one or more matrices representing the feature embedding matrix so as to form a set of one or more second intermediate matrices, and subsequently multiply the set of one or more second intermediate matrices by the weight matrix. Following step S508 the method passes to step S510, such that step S506 is not performed if the weight matrix comprises more columns than rows.

Figure 6 shows the different options for the order in which the adjacency matrix, the feature embedding matrix and the weight matrix are multiplied in a GCN layer, for both the situation in which the weight matrix is wide (i.e. W has more columns than rows) and the situation in which the weight matrix is tall (i.e. W has more rows than columns). In accordance with the rules of matrix multiplication, in a GCN layer performing AxHxW, the number of columns of the feature embedding matrix (H) equals the number of rows of the weight matrix (W). As described in examples above, the adjacency matrix A is an $N \times N$ matrix, the feature embedding matrix H is an $N \times F$ matrix, and the weight matrix W is a $F \times F'$ matrix. Usually, $N > F$ and $N > F'$. When the weight matrix is tall, $F > F'$; whereas when the weight matrix is wide $F' > F$. In these examples, the first intermediate result (HW), i.e. the result of multiplying the feature embedding matrix (H) and the weight matrix (W), is a $N \times F'$ matrix; and the second intermediate result (AH), i.e. the result of multiplying the adjacency matrix (A) and the feature embedding matrix (H) is an $N \times F$ matrix.

Since the adjacency matrix is the largest matrix, the total number of MAC operations is normally dominated by the number of MAC operations involved in multiplying the adjacency matrix by another matrix (either H or HW). The number of columns output from a matrix multiplication is equal to the number of columns in the right-hand matrix involved in that multiplication. In the situation in which the weight matrix (W) for the GCN layer is wide (i.e. W has more columns than rows, i.e. $F' > F$, as illustrated in the top half of Figure 6), the feature embedding matrix (H) has fewer columns (e.g. it has $F$ columns) than the first intermediate result (e.g. which has $F'$ columns). Therefore, it is preferable for (AxH) to be performed first (as shown in the top left quarter of Figure 6) rather than for (HxW) to be performed first (as shown in the top right quarter of Figure 6), i.e. step S508 is preferable to step S506. This is because the feature embedding matrix (H) has fewer columns than the first intermediate result (HW), and so the adjacency matrix (A) is multiplied by a matrix having fewer columns. This reduces the number of MAC operations involved in determining the result of the matrix multiplication AxHxW. For example, if $N = 4096$, $F = 512$ and $F' = 1024$ then W is wide and performing the multiplication of the adjacency matrix (A) and the feature embedding matrix (H) and then performing the multiplication of (AH) and the weight matrix (W), as shown in the top left quarter of Figure 6, may involve approximately 10.7 billion MAC operations (i.e. 4096x4096x512 + 4096*512*1024 $\approx$ (8.6 + 2.1) billion = 10.7 billion). In contrast, in this example, performing the multiplication of the feature embedding matrix (H) and the weight matrix (W) and then performing the multiplication of the adjacency matrix (A) and (HW), as shown in the top right quarter of Figure 6, may involve approximately 19.3 billion MAC operations (i.e. 4096x512x1024 + 4096*4096*1024 $\approx$ (2.1 + 17.2) billion = 19.3 billion). So it can be seen that performing the AxH multiplication and then the (AH)xW multiplication may involve performing approximately 55% of the MAC operations compared to performing the HxW multiplication and then the Ax(HW) multiplication to determine the result AxHxW. Therefore, when the weight matrix (W) for the GCN layer is wide, step S508 (and not step S506) is performed to configure the GCN layer to determine the result AxHxW.

In the situation in which the weight matrix (W) for the GCN layer is tall (i.e. W has more rows than columns, i.e. $F > F'$, as illustrated in the bottom half of Figure 6), the feature embedding matrix (H) has more columns (e.g. it has F columns) than the first intermediate result (e.g. which has $F'$ columns). Therefore, it is preferable for (HxW) to be performed first (as shown in the bottom right quarter of Figure 6) rather than for (AxH) to be performed first (as shown in the bottom left quarter of Figure 6), i.e. step S506 is preferable to step S508. This is because the first intermediate result (HW) has fewer columns than the feature embedding matrix (H), and so the adjacency matrix (A) is multiplied by a matrix having fewer columns. This reduces the number of MAC operations involved in determining the result of the matrix multiplication AxHxW. For example, if $N = 4096$, $F = 512$ and $F' = 256$ then W is tall and performing the multiplication of the adjacency matrix (A) and the feature embedding matrix (H) and then performing the multiplication of (AH) and the weight matrix (W), as shown in the bottom left quarter of Figure 6, may involve approximately 9.1 billion MAC operations (i.e. 4096x4096x512 + 4096*512*256 ≈ (8.6 + 0.5) billion = 9.1 billion). In contrast, in this example, performing the multiplication of the feature embedding matrix (H) and the weight matrix (W) and then performing the multiplication of the adjacency matrix (A) and (HW), as shown in the bottom right quarter of Figure 6, may involve approximately 4.8 billion MAC operations (i.e. 4096x512x256 + 4096*4096*256 ≈ (0.5 + 4.3) billion = 4.8 billion). So it can be seen that performing the HxW multiplication and then the A×(HW) multiplication may involve performing approximately 53% of the MAC operations compared to performing the AxH multiplication and then the (AH)xW multiplication to determine the result AxHxW. Therefore, when the weight matrix (W) for the GCN layer is tall, step S506 (and not step S508) is performed to configure the GCN layer to determine the result AxHxW.

As described above, the GCN may comprise one or more GCN layers. If the GCN comprises a plurality of GCN layers, when step S506 or S508 has been performed for the current GCN layer, there may be one or more further GCN layers in the GCN to be configured. The multiplication order can be varied on a layer-by-layer basis. That is, different GCN layers in the same GCN can perform their AxHxW operation in different orders. Because the output of a layer is the same regardless of the multiplication order used, no knock-on changes to subsequent layers need to be made when a multiplication order is selected for a particular GCN layer.

In step S510, the processor(s) 404 determines whether there is another GCN layer in the GCN to be configured. If it is determined in step S510 that there is another GCN layer in the GCN to be configured then the method passes to step S512.

In step S512 the processor(s) 404 configures the GCN to process an output of the current GCN layer (e.g. the output $AH_1W_1$ of the first GCN layer 301 shown in Figure 3) to determine a feature embedding matrix (e.g. $H_2$) for the next GCN layer (e.g. for the second GCN layer 311) in the GCN. The processing of the output 308 of the first GCN layer 301 in step S512 may use a non-linear function. In particular, the processing of the output 308 of the first GCN layer 301 in step S512 may comprise applying an activation function using the activation logic 310. As shown in Figure 3, the activation logic 310 may be a rectified linear unit (ReLU). The processing of the output 308 of the first GCN layer 301 might comprise only applying the activation function, i.e. it might be the case that no other processing is performed on the output 308 of the first GCN layer 301 in order to determine the feature embedding matrix ($H_2$) for the second GCN layer 311. In particular, the processing of the output 308 of the first GCN layer 301 does not comprise performing a permute operation on the output 308 of the first GCN layer 301. The dimensions of the matrix 308 are not altered by the processing, such that the dimensions of the matrix 308 are the same as the dimensions of the feature embedding matrix ($H_2$) for the second GCN layer 311. Furthermore, the ordering of the rows and columns of the matrix 308 is not altered by the processing, such that the ordering of the rows and columns of the matrix 308 is the same as the ordering of the rows and columns of the feature embedding matrix ($H_2$) for the second GCN layer 311.

Following step S512 the next GCN layer is considered and the method passes back to step S504. Steps S504 to S512 are performed for each of the GCN layers of the GCN. Therefore, for each of one or more further GCN layers, the processor(s) 404:

- determines in step S504 that a weight matrix for the further GCN layer comprises: (i) more rows than columns, or (ii) more columns than rows; and

- in response to determining in step S504 that the weight matrix for the further GCN layer comprises more rows than columns, configures the GCN in step S506 such that the further GCN layer is configured to determine a first intermediate result (HW) for the further GCN layer representing a result of multiplying a feature embedding matrix (H) for the further GCN layer and the weight matrix (W) for the further GCN layer, and subsequently use the determined first intermediate result (HW) for the further GCN layer to determine a full result (AHW) for the further GCN layer representing a result of multiplying the adjacency matrix (A), the feature embedding matrix (H) and the weight matrix (W) for the further GCN layer; or

- in response to determining in step S504 that the weight matrix for the further GCN layer comprises more columns than rows, configures the GCN in step S508 such that the further GCN layer is configured to determine a second intermediate result (AH) for the further GCN layer representing a result of multiplying the adjacency matrix (A) and the feature embedding matrix (H) for the further GCN layer, and subsequently use the determined second intermediate result (AH) for the further GCN layer to determine the full result (AHW) for the further GCN layer representing the result of multiplying the adjacency matrix (A), the feature embedding matrix (H) and the weight matrix (W) for the further GCN layer.

It is noted again that the adjacency matrix is the same for all of the GCN layers in a GCN, but different GCN layers in a GCN may have different feature embedding matrices and different weight matrices. Steps S504 to S512 are performed for each GCN layer of the GCN, and it may be the case that the weight matrix for one or more of the GCN layers is wide whilst the weight matrix for one or more other GCN layers is tall. Therefore, one or more of the GCN layers in a GCN may be configured (in step S506) to determine the first intermediate result (HW) and then determine a result of multiplying the adjacency matrix (A) by the first intermediate result (HW), whilst a different one or more of the GCN layers in the same GCN may be configured (in step S508) to determine the second intermediate result (AH) and then determine a result of multiplying the second intermediate result (AH) by the weight matrix (W).

If it is determined in step S510 that there is not another GCN layer in the GCN to be configured then the method passes to step S514. In step S514 the configured GCN is stored for subsequent implementation. For example, the GCN may be stored in the memory 406 of the processing system 400. The stored GCN may be subsequently implemented on the system 402. For example, step S514 may comprise outputting a computer readable description of the configured GCN that, when implemented at the system 402, causes the configured GCN to be executed. Where we describe that the configured GCN is "stored" herein it is to be understood that this is intended to cover storing data defining the configured GCN. The data defining the configured GCN comprises data defining the adjacency matrix (A), data defining the weight matrix (W) for each of the one or more configured GCN layers, data defining any other components of the configured GCN such as activation functions to be implemented between consecutive GCN layers in the configured GCN, and data defining the configuration of the GCN layers (e.g. data defining the multiplication order for the GCN layers). For example, the configured GCN may be used to perform image processing. Performing image processing using the configured GCN may comprise: receiving (e.g. at the hardware logic) image data representing one or more images; processing said image data using the configured GCN (e.g. as implemented at the hardware logic); and generating (e.g. at the hardware logic) an output representative of the processing of said image data. In an example, said image processing may comprise image classification. In image classification, image data representing one or more images may be input to the configured GCN, and the output of that configured GCN may be data indicative of a probability (or set of probabilities) that each of those images belongs to a particular classification (or set of classifications). That is, the computations performed in the layers of the configured GCN may enable characteristic features (e.g. low level features such as edges) of the input data to be identified, and predictions to be made as to which classification (or set of classifications) the one or more images represented by that input data belongs to.

As described herein, the adjacency matrix (A) is often large, e.g. it may be a 4096x4096 matrix. A large amount of memory bandwidth may be used in order to read in the data defining the adjacency matrix. Further, the time taken to read the data defining the adjacency matrix in from a memory can also affect the time taken for a GCN to execute its operation, which can affect the latency of the GCN. Large sets of data can also place a large computational demand on the processing elements of the hardware logic (e.g. the neural network accelerator or graphics processing unit) implementing the GCN. For example, those processing elements may be configured to perform a large number of multiply and accumulate operations.

Furthermore, the inventors have observed that the adjacency matrix (A) used in the GCN layer(s) of a GCN is typically sparse. In other words, often, a large proportion of the elements of the adjacency matrix are equal to zero. Performing a multiplication of a value by zero will inevitably result in a zero output value - regardless of the value that is multiplied by zero. Although multiplying a value by zero is a simple operation to implement, if this operation is performed lots of times (e.g. hundreds of millions of times) then this requires a significant amount of processing power and time. It is undesirable to incur the bandwidth, latency and computational demand drawbacks incurred by performing the multiplications by zero for a large proportion of the adjacency matrix which will inevitably result in a zero output value.

Described herein are methods of, and processing systems for, compressing a GCN in order to address one or more of the problems described in the preceding paragraphs. In particular, the values of the adjacency matrix (A) are rearranged (i.e. permuted and partitioned) into one or more "denser" adjacency sub-matrices and those adjacency sub-matrices are used to implement the GCN layer(s). As will become apparent in the description below, this reduces the number of unnecessary "multiple-by-zero" operations being performed - i.e. operations where a feature or weight value is multiplied by a zero adjacency value. Removing some of the zero values from the computation completely allows the computation speed of implementing the GCN to be increased significantly.

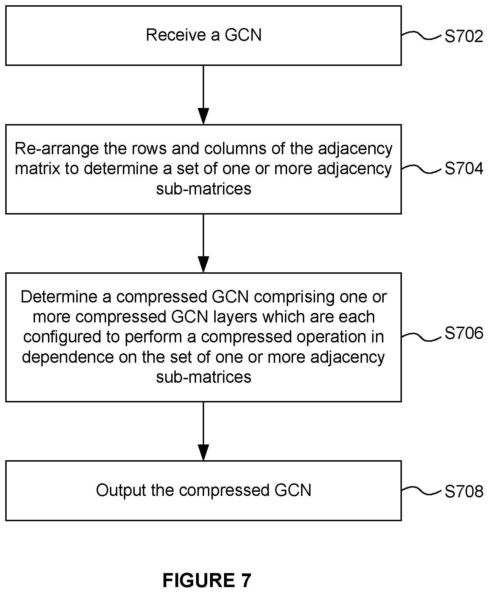

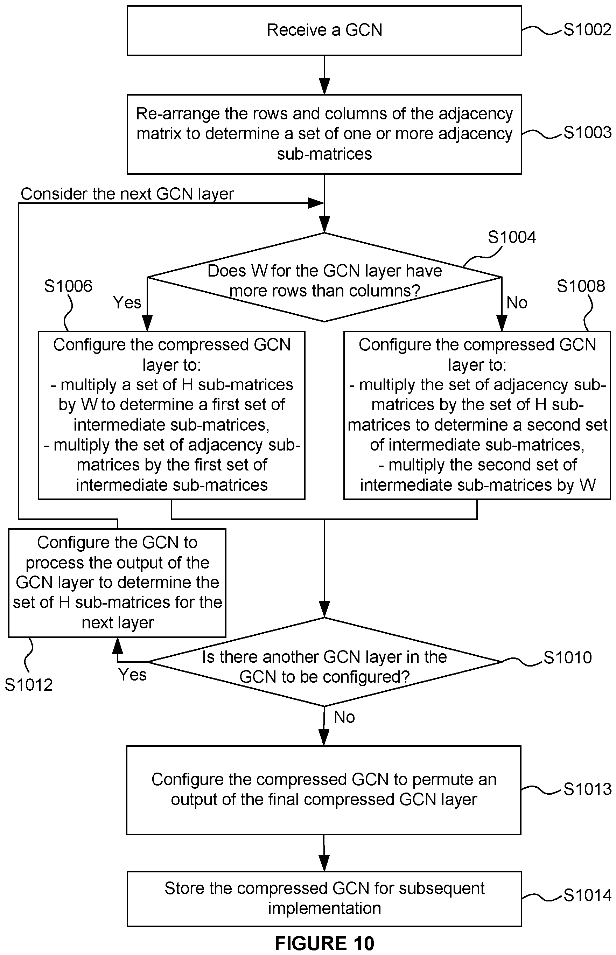

Figure 7 is a flow chart for a method of compressing a GCN. The method of compressing a GCN shown in Figure 7 is a computer-implemented method. In particular, the method shown in Figure 7 is performed by the at least one processor 404. The method of compressing a GCN described with reference to Figure 7 may be performed separately to, or in combination with, the method of configuring a GCN described above with reference to Figure 5. A combined method, in which a GCN is both configured and compressed, is described below with reference to the flow chart of Figure 10.

In step S702, the processor(s) 404 receives a GCN comprising one or more GCN layers. As described above, each of the one or more GCN layers of the GCN is arranged to perform an operation in dependence on an adjacency matrix, said adjacency matrix comprising a plurality of non-zero values and a plurality of zero values. In particular, each of the one or more GCN layers of the GCN is arranged to perform an operation in dependence on the adjacency matrix, a feature embedding matrix and a weight matrix. The received GCN may be a trained GCN. That is, as would be understood by the skilled person, the received GCN may have previously been trained by iteratively: processing training data in a forward pass; assessing the accuracy of the output of that forward pass; and updating coefficients of the GCN layers (e.g. updating the values in the weight matrices of the GCN layers) in a backward pass.

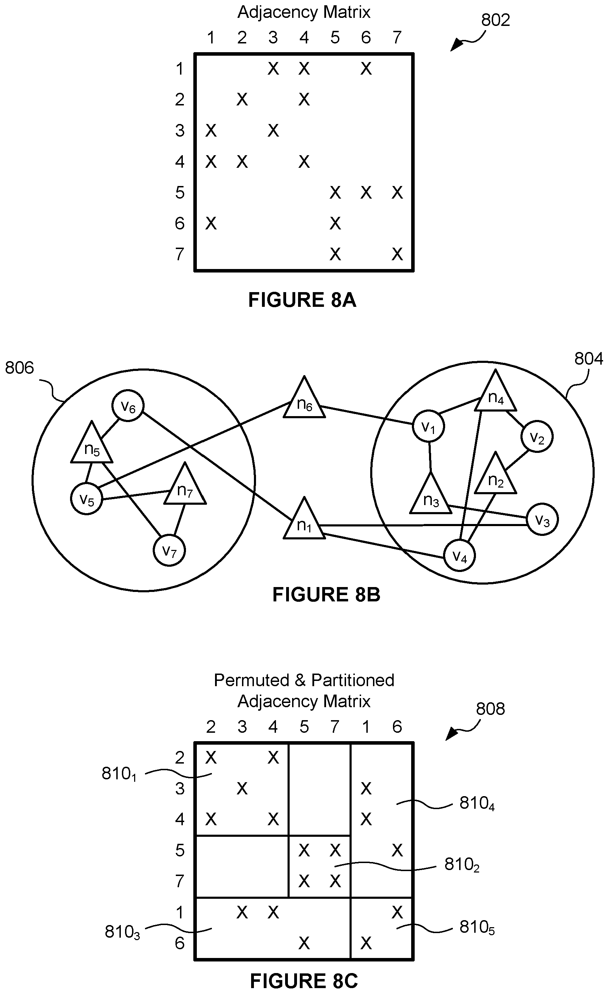

Figure 8A shows an example adjacency matrix 802 comprising a plurality of elements representative of non-zero values and a plurality of elements representative of zero values. In Figure 8A, elements of the adjacency matrix 802 representative of non-zero values are marked with an "X", whilst elements of the adjacency matrix 802 representative of zero values are not marked. For example, the elements of row 1 positioned in columns 3, 4 and 6 of the adjacency matrix 802 are representative of non-zero values (and are marked with an "X"), whilst the other elements positioned in row 1 of the adjacency matrix 802 are representative of zero values (and are not marked with an "X"). The adjacency matrix is a square matrix. The adjacency matrix 802 shown in Figure 8A is a 7x7 matrix, and it is to be understood that this is a simplified example describing the connection information between nodes in a graph comprising seven nodes. In more realistic examples, the adjacency matrix may be much larger than that shown in Figure 8A, e.g. the adjacency matrix may be a 4096x4096 matrix describing the connection information between nodes in a graph comprising 4096 nodes. A non-zero value may be positive or negative, and with any suitable magnitude that is not equal to zero. As an example, a binary "1" could be used to represent a non-zero value in the adjacency matrix, whilst a binary "0" could be used to represent a zero value within the adjacency matrix - although this need not be the case. For example, a binary "0" could be used to represent a non-zero value in the adjacency matrix, whilst a binary "1" could be used to represent a zero value within the adjacency matrix. It is also to be understood that any other arbitrarily selected value could be used to represent a non-zero value or a zero value within the adjacency matrix. As an illustrative example, one or more bits indicative of an even number could be used to represent a non-zero value in the adjacency matrix, whilst one or more bits indicative of an odd number could be used to represent a zero value within the adjacency matrix. Furthermore, the values in the adjacency matrix may be normalised across each of the rows of the adjacency matrix, e.g. as described above with reference to Figure 1C.

In step S704, the processor(s) 404 rearranges the rows and columns of the adjacency matrix 802 so as to gather the plurality of non-zero values of the adjacency matrix 802 into a set of one or more adjacency sub-matrices. The set of one or more adjacency sub-matrices has a greater average density of non-zero values than the adjacency matrix 802. In other words, set of one or more adjacency sub-matrices has a greater number of non-zero values per total number of values of the set of one or more adjacency sub-matrices than the number of non-zero values per total number of values of the adjacency matrix. To describe this another way, the "non-zero density" of the set of one or more sub-matrices, as a whole, is greater than the "non-zero density" of the adjacency matrix 802. The set of one or more adjacency sub-matrices includes all of the non-zero values of the adjacency matrix 802, but does not comprise all of the zero values of the adjacency matrix 802. In other words, the set of one or more adjacency sub-matrices comprises a subset of the values of the adjacency matrix. Increasing the number of zero values of the adjacency matrix 802 that are not included in the set of one or more adjacency sub-matrices, increases the average density of non-zero values of the set of one or more adjacency sub-matrices.

In some examples, each of the one or more adjacency sub-matrices may have a greater average density of non-zero values than the adjacency matrix. In other words, each of the one or more adjacency sub-matrices may have a greater number of elements representative of non-zero values per total number of elements of that adjacency sub-matrix than the number of elements representative of non-zero values per total number of elements of the adjacency matrix. That is, in these examples, the "non-zero density" of each and every adjacency sub-matrix of the set of one or more adjacency sub-matrices is greater than the "non-zero density" of the adjacency matrix - although this need not be the case.

The rearranging of the rows and columns of the adjacency matrix in step S704 may be performed in dependence on a hypergraph model. A hypergraph model can be formed in dependence on the respective row and column position of each of the plurality of elements representative of non-zero values within the adjacency matrix 802. Figure 8B shows an example hypergraph model corresponding to the adjacency matrix 802 shown in Figure 8A. More generally, the rearranging of the rows and columns of the adjacency matrix may be performed in dependence on a hypergraph model, a hypergraph clustering algorithm, a graph partitioning algorithm, a separator vertex set approach or any other suitable approach for gathering like values within an array of values - as would be understood by the skilled person.

Figure 8C shows an example rearranged adjacency matrix 808 comprising a plurality of adjacency sub-matrices $810_1$, $810_2$, $810_3$, $810_4$ and $810_5$. The hypergraph model can be used to convert the adjacency matrix 802 into "doubly-bordered block-diagonal matrix form" as shown in the rearranged adjacency matrix 808. The doubly-bordered block-diagonal matrix form comprises: (i) a plurality of block arrays (e.g. $810_1$ and $810_2$) which are aligned along the diagonal of the rearranged adjacency matrix 808, (ii) one or more horizontal border arrays (e.g. $810_3$) which are horizontally aligned across the rearranged adjacency matrix 808, and (iii) one or more vertical border arrays (e.g. $810_4$) which are vertically aligned across the rearranged adjacency matrix 808. The corner array $810_5$ is a border array and may be considered to be a horizontal border array and/or a vertical border array. The one or more block arrays and the border arrays are non-overlapping. The block arrays, the one or more horizontal border arrays and the one or more vertical border arrays are adjacency sub-matrices.

The rearrangement of the rows and columns of the adjacency matrix 802 in step S704 comprises: performing permutations of the rows and of the columns of the adjacency matrix 802; and partitioning the rows and columns of the permuted adjacency matrix to determine the set of one or more adjacency sub-matrices 810 shown in Figure 8C. For example, performing permutations of the rows and of the columns of the adjacency matrix 802 in step S704 comprises performing a symmetric permutation, and the partitioning of the rows of the permuted adjacency matrix 808 is the same as the partitioning of the columns of the permuted adjacency matrix 808.

In the example shown in Figure 8A, the adjacency matrix 802 is symmetric, e.g. the adjacency matrix 802 may represent an undirected graph. However, in other examples, the adjacency matrix may represent a directed graph, and in those examples the adjacency matrix might not initially be symmetric. In those examples step S704 may comprise making the adjacency matrix symmetric. In particular, the rearranging of the rows and columns of the adjacency matrix, A, in step S704 may comprise: determining a symmetric adjacency matrix, A', such that, for each of the values, $A[i,j]$, of the adjacency matrix: if $A[i,j] = 0$ and $A[j,i] \neq 0$, the corresponding value of the symmetric adjacency matrix, $A'[i,j]$, is non-zero, and if $A[i,j] \neq 0$ or $A[j, i] = 0$, the corresponding value of the symmetric adjacency matrix, $A'[i,j]$, is equal to $A[i,j]$. Then the hypergraph model can be used to rearrange the symmetric adjacency matrix. For example, the hypergraph model may be used to reorder and partition the rows and columns of the symmetric adjacency matrix into a singly-bordered block-diagonal matrix form which comprises one or more initial border arrays which are either horizontally or vertically aligned across the symmetric adjacency matrix. For example, in the singly-bordered block-diagonal matrix form, all of the one or more initial border arrays may be either horizontally or vertically aligned across the symmetric adjacency matrix. Then the column reordering may be applied to the rows, or vice versa, to re-arrange the adjacency matrix into the doubly-bordered block-diagonal form matrix. In particular, if the one or more initial border arrays are horizontally aligned across the symmetric adjacency matrix, the row ordering is applied to the columns of the singly-bordered block diagonal matrix to thereby determine the adjacency matrix in the doubly-bordered block-diagonal matrix form; whereas if the one or more initial border arrays are vertically aligned across the symmetric adjacency matrix, the column ordering is applied to the rows of the singly-bordered block diagonal matrix to thereby determine the adjacency matrix in the doubly-bordered block-diagonal matrix form. In an alternative example, the hypergraph model may be used to reorder and partition the rows and columns of the symmetric adjacency matrix directly into a doubly-bordered block-diagonal matrix form.

As would be understood by those skilled in the art, hypergraphs may be implemented using a row-net hypergraph model or a column-net hypergraph model. A row-net or a column-net hypergraph model may be used in step S704 to re-arrange the adjacency matrix 802 into singly-bordered block-diagonal form matrix, before applying the row/column ordering to the columns/rows to determine the adjacency matrix in the doubly-bordered block diagonal matrix form. The same reordered adjacency matrix 808 will be produced in step S704 whether a row-net or a column-net hypergraph is used.

In the example shown in Figure 8B, the hypergraph model may be a "rownet" hypergraph model. Forming a rownet hypergraph model comprises forming a vertex (denoted $v_1$ to $v_7$ in Figure 8B) representative of each column of the adjacency matrix 802 that comprises an element representative of a non-zero value and forming a net (denoted $n_1$ to $n_7$ in Figure 8B) representative of each row of the adjacency matrix 802 that comprises an element representative of a non-zero value. For each of the plurality of elements representative of non-zero values within the adjacency matrix 802, the vertex representative of the column of the adjacency matrix 802 comprising that element representative of a non-zero value is connected to the net representative of the row of the adjacency matrix 802 comprising that element representative of a non-zero value. For example, column 4 of the adjacency matrix 802 is represented by vertex $v_4$, and row 1 of the adjacency matrix 802 is represented by vertex $n_1$. It can be seen in Figure 8A that the element positioned in row 1, column 4 of the adjacency matrix 802 is representative of a non-zero value. As such, by way of example, the vertex $v_4$ is connected to the net $n_1$ in the hypergraph shown in Figure 8B. To form the rownet hypergraph model shown in Figure 8B, the same vertex-net connecting process has been repeated for each of the elements representative of a non-zero value in the adjacency matrix 802 - as will be understood by comparing Figures 8A and 8B.

Put another way, a rownet hypergraph model can be constructed for a matrix A as follows. Let $H = (V,N)$ be a hypergraph $H$ with a vertex set $V$ and a net set $N$. Each column $A(:,i)$ is represented by a vertex $v_i \in V$ and each row $A(j,:)$ is represented by a net $n_j \in N$. A net $n_j$ connects a vertex $v_i$ if there is an element representative of a non-zero value $A(i,j)$ in the matrix A. Vertices connected by net $n_j$ can be denoted as $pins(n_j) = (v_i \in V | \exists A(j,i) \in A(j,:)\}$.

It is to be understood that, when forming a hypergraph model (e.g. a rownet hypergraph model) for the adjacency matrix, a vertex may not be formed for a column of the adjacency matrix that does not comprise any elements representative of a non-zero value (none shown in the Figures), and a net may not be formed for a row of the matrix that does not comprise any elements representative of a non-zero value (none shown in the Figures).

In another example, the hypergraph model is a "columnnet" hypergraph model. Forming a columnnet hypergraph model comprises forming a net representative of each column of the adjacency matrix 802 that comprises an element representative of a non-zero value and forming a vertex representative of each row of the adjacency matrix that comprises an element representative of a non-zero value. For each of the plurality of elements representative of non-zero values within the adjacency matrix, the net representative of the column of the adjacency matrix comprising that element representative of a non-zero value is connected to the vertex representative of the row of the adjacency matrix comprising that element representative of a non-zero value.

Put another way, a columnnet hypergraph model can be constructed for a matrix A as follows. Let $H = (V,N)$ be a hypergraph $H$ with a vertex set $V$ and a net set $N$. Each row $A(j,:)$ is represented by a vertex $v_j \in V$ and each column $A(:,i)$ is represented by a net $n_i \in N$. A net $n_i$ connects a vertex $v_j$ if there is an element representative of a non-zero value $A(i,j)$ in the coefficient matrix A. Vertices connected by net $n_i$ can be denoted as $pins(n_i) = \{v_j \in V | \exists A(j,i) \in A(j,:)\}$.

It is to be understood that, when forming a hypergraph model (e.g. a columnnet hypergraph model) for the adjacency matrix, a net may not be formed for a column of the adjacency matrix that does not comprise any elements representative of a non-zero value (none shown in the Figures), and/or a vertex may not be formed for a row of the adjacency matrix that does not comprise any elements representative of a non-zero value (none shown in the Figures).

Once formed, the hypergraph model can be partitioned. Figure 8B shows a hypergraph model that has been partitioned into two parts 804 and 806. It is to be understood that a hypergraph model may be partitioned into any suitable number of parts. The hypergraph model can be partitioned in dependence on a load balancing constraint that aims to minimise the number of nets that are connected to vertices within more than one of part - e.g. that aims to minimise the number of rows of the border array. The rows and/or columns of the adjacency matrix can be rearranged in dependence on the partitioned hypergraph model so as to gather the plurality of elements representative of non-zero values of the adjacency matrix into the one or more sub-matrices.

The elements representative of connected graph nodes that are positioned in the rows of the adjacency matrix 802 that are represented by nets that are connected to vertices representative of columns of the adjacency matrix 802 within a single part of the partitioned hypergraph model can be gathered into one or more diagonal block arrays in the singly-bordered block-diagonal form matrix. When the row ordering is then applied to the columns of the singly-bordered block diagonal form matrix, the diagonal block arrays, e.g. $810_1$ and $810_2$, and the vertical border array, e.g. $810_4$, are formed in the doubly-bordered block-diagonal form matrix. For example, in Figure 8B, part 804 leads to the formation of block array $810_1$ shown in Figure 8C. Some of the elements representative of non-zero values that are positioned in the rows of the adjacency matrix that are represented by nets that are connected only to vertices representative of columns of the adjacency matrix within part 804 are gathered into diagonal block array $810_1$. For example, in Figure 8B, nets $n_2$, $n_3$ and $n_4$ are connected only to vertices within part 804 - i.e. respectively, vertices $v_2$ and $v_4$; vertices $v_1$ and $v_3$; and vertices $v_1$, $v_2$ and $v_4$. As such, the rows and columns of the adjacency matrix 802 can be rearranged such that some of the elements representative of non-zero values that are positioned in rows 2, 3 and 4 are gathered into diagonal block array $810_1$ - as shown in Figure 8C. In this case, it is the elements representative of connected graph nodes that are positioned in rows 2, 3 and 4, and columns 2, 3 and 4, that are gathered into diagonal block array $810_1$. In an analogous way: part 806 leads to the formation of diagonal block array $810_2$ shown in Figure 8C, such that the rows and columns of the adjacency matrix 802 can be rearranged such that some of the elements representative of non-zero values that are positioned in rows 5 and 7 are gathered into diagonal block array $810_2$. In this case, it is the elements representative of connected graph nodes that are positioned in rows 5 and 7, and columns 5 and 7, that are gathered into diagonal block array $810_2$. Applying the row ordering to the columns of the singly-bordered block diagonal matrix means that the other elements representative of connected graph nodes that are positioned in the rows of the adjacency matrix that are represented by nets that are connected to vertices representative of columns of the adjacency matrix within a single part are gathered into the vertical border array, e.g. $810_4$. In this case, it is the elements representative of connected graph nodes that are positioned in rows 2, 3, 4, 5 and 7, and columns 1 and 6, that are gathered into vertical border array $810_4$ - as will be understood from the following paragraph.

The elements representative of non-zero values that are positioned in the rows of the adjacency matrix 802 that are represented by nets that are connected to vertices representative of columns of the adjacency matrix 802 within more than one part of the partitioned hypergraph model can be gathered into a horizontal border array in the singly-bordered block-diagonal form matrix. When the row ordering is then applied to the columns of the singly-bordered block diagonal matrix, the horizontal and vertical border arrays, e.g. $810_3$, $810_4$ and $810_5$, are formed in the doubly-bordered block-diagonal matrix form. For example, in Figure 8B, net $n_1$ is connected to vertices within parts 804 and 806 - i.e. vertices $v_3$, $v_4$ and $v_6$. As shown in Figure 8B, net $n_6$ is also connected to vertices within more than one part. As such, the rows and columns of the adjacency matrix 802 are rearranged such that the elements representative of non-zero values that are positioned in rows 1 and 6 are gathered into the horizontal border arrays $810_3$ and $810_5$. Applying the row ordering to the columns of the singly-bordered block diagonal matrix form causes the vertical border array, e.g. $810_4$, to be formed in the doubly-bordered block-diagonal matrix form - e.g. such that the elements representative of connected graph nodes that are positioned in columns 1 and 6 are gathered into the vertical border array $810_4$. As described above, the reordering and partitioning of the rows of the permuted and partitioned adjacency matrix 808 is the same as the reordering and partitioning of the columns of the permuted and partitioned adjacency matrix 808.

It is to be understood that any row or column of the adjacency matrix 802 that does not include any elements representative of a non-zero value (e.g. any row or column for which a net or vertex, as appropriate, was not formed when forming the hypergraph model) can be rearranged (e.g. arbitrarily) to any row or column position within the rearranged adjacency matrix 808. Alternatively, a further "empty" block array (not shown in the Figures) may be formed into which elements of the rows and columns that do not include any elements representative of a non-zero value can be gathered. Said "empty" block array may be used in an equivalent manner as the "non-empty" block arrays during the future computations performed in the compressed layer (as will be described further herein), or not used in (e.g. discarded from) the future computations performed in the compressed layer.

Put another way, a $K$-way vertex partition of a hypergraph model $H$ can be defined as $\Pi(H) = \{V_1, V_2, \ldots V_K\}$ consisting of mutually disjoint and exhaustive subsets of vertices $V_m \in V$ where $V_m \cap V_n = \emptyset$ if $m \neq n$ and $V_m \neq \emptyset$ for all $V_m \in \Pi(H)$ such that $U_{V_m \in \Pi(H)} V_m = V$. Under a partition $\Pi(H)$, the set of parts that are connected by a net $n_j$ can be defined as the connectivity set $\Lambda(n_j)$ and the number of parts that are connected by net $n_j$ can be defined as connectivity $\lambda(n_j) = |\Lambda(n_j)|$. A net $n_j$ is said to be cut (external) if it connects to multiple parts (i.e. $\lambda(n_j) > 1$) and uncut (internal) otherwise (i.e., $\lambda(n_j) = 1$). A net $n_j$ is an internal net of a part $V_m$ if it connects only vertices in part $V_m$ (i.e., $\Lambda(n_j) = V_m$ and $pins(n_j) = V_m$). The set of internal nets of a part $V_m$ is denoted as $N_m$, and the set of external nets of a partition $\Pi(H)$ is denoted as $N_S$. Therefore, a $K$-way vertex partition $\Pi(H)$ can also induces a $(K + 1)$-way partition $\{N_1, N_2, \cdots N_K; N_S\}$ on the net set $N$. Here, $N_S$ is a net separator whose removal gives $K$ disconnected vertex parts $V_1, V_2, \cdots V_K$ as well as $K$ disconnected net parts $N_1, N_2, \cdots N_K$.

A hypergraph model H can be partitioned with the objective of minimizing the number of cut nets under the load balancing constraint $W(V_m) \leq W_{avg}(1 + \varepsilon)$, $\forall V_m \in \Pi(H)$ where the weight of a part $V_m$ is $W(V_m) = \Sigma_{vi \in Vm} w(v_i)$, the average part weight is $W_{avg} = \Sigma_{vi \in V} w(v_i) /K$, and the maximum allowed imbalance ratio is $\varepsilon$. The weight of each vertex $v_i$ can be determined as $w(v_i) = 1$. The aim of the load-balancing constraint may be to produce equal-sized block arrays, e.g. which can each fit in a buffer of a neural network accelerator (NNA).

The K-way partition $\Pi(H) = \{V_1, V_2, \cdots V_K\} = \{N_1, N_2, \cdots N_K; N_S\}$ can induce a partial ordering on the rows and columns of the adjacency matrix A. In this ordering, in examples where the hypergraph model is formed as a rownet hypergraph model, the columns associated with the vertices in $V_{m+1}$ can be ordered after the columns associated with the vertices in $V_m$ for $m = 1, 2, \cdots K - 1$. Similarly, the rows represented with the internal nets $N_{m+1}$ of part $V_{m+1}$ can be ordered after the rows associated with the internal nets $N_m$ of part $V_m$ for m = 1, 2, $\cdots K - 1$. The rows associated with the external nets $N_S$ are ordered last as the border array. In other words, a vertex $v_i \in V_m$ means permuting column $A(:,i)$ to the mth column slice, an internal net $n_j \in N_m$ means permuting row $A(j,:)$ to the mth row slice and an external net $n_j \in N_S$ means permuting row $A(j,:)$ to border matrix. Then, the row ordering can be applied to the columns of the singly-bordered block diagonal matrix to thereby determine the adjacency matrix in the doubly-bordered block-diagonal matrix form.

It will also be appreciated, e.g. by considering Figures 8B and 8C, that a rearranged matrix in the doubly-bordered block diagonal matrix form could be obtained directly from a partitioned hypergraph model - i.e. without first forming a rearranged matrix in the singly-bordered block diagonal matrix form. For example, nets $n_1$ and $n_6$ are connected to vertices in more than one part of the partitioned hypergraph model - and so the horizontal and vertical border arrays can be formed using rows 1 and 6, and columns 1 and 6, respectively. Nets $n_2$, $n_3$ and $n_4$ are connected to vertices within a single part (i.e. part 804) - and so a first diagonal block array (i.e. $810_1$) can be formed using rows 2, 3 and 4, and columns 2, 3 and 4. Nets $n_5$ and $n_7$ are connected to vertices within a single part (i.e. part 806) - and so a second diagonal block array (i.e. $810_2$) can be formed using rows 5 and 7, and columns 5 and 7.

The rearranged adjacency matrix 808 comprises a plurality of sub-matrices $810_1$, $810_2$, $810_3$, $810_4$ and $810_5$. It can be appreciated that the rearranged adjacency matrix 808 shown in Figure 8C can be formed by rearranging (e.g. reordering) the rows and columns of the adjacency matrix 802 shown in Figure 8A. That is, Figure 8C shows the 7 rows and 7 columns of the adjacency matrix 802 in a different order. For example, column 2 of the adjacency matrix 802, having elements representative of non-zero values in rows 2 and 4, has been shifted "left" and is now the first column in rearranged adjacency matrix 808. In another example, row 6 of adjacency matrix 802, having elements representative of non-zero values in columns 1 and 5, has been shifted "down" and is now the final row in rearranged adjacency matrix 808. By rearranging the rows and columns as described herein, the plurality of elements representative of non-zero values of the adjacency matrix are gathered into adjacency sub-matrices $810_1$, $810_2$, $810_3$, $810_4$ and $810_5$.

The adjacency matrix 802 comprises 17 elements representative of non-zero values, and a total of 49 (i.e. 7x7) elements. As such, the "non-zero density" of adjacency matrix 802 is 0.35 (i.e. 17/49). The set of adjacency sub-matrices $810_1$, $810_2$, $810_3$, $810_4$ and $810_5$ also comprises 17 elements representative of non-zero values, but in a total of 37 (i.e. (3x3)+(2x2)+(2x5)+(5x2)+(2x2)) elements. As such, the "non-zero density" of the set of sub-matrices $810_1$, $810_2$, $810_3$, $810_4$ and $810_5$ is 0.46 (i.e. 17/37). Thus, the "non-zero density" of the set of adjacency sub-matrices $810_1$, $810_2$, $810_3$, $810_4$ and $810_5$, as a whole, is greater than the "non-zero density" of the adjacency matrix 802.

Furthermore, adjacency sub-matrix $810_1$ comprises 5 elements representative of non-zero values, and a total of 9 (i.e. 3x3) elements. As such, the "non-zero density" of adjacency sub-matrix $810_1$ is 0.56 (i.e. 5/9). Adjacency sub-matrix $810_2$ comprises 4 elements representative of non-zero values, and a total of 4 (i.e. 2x2) elements. As such, the "non-zero density" of adjacency sub-matrix $810_2$ is 1 (i.e. 4/4). Adjacency sub-matrix $810_3$ comprises 3 elements representative of non-zero values, and a total of 10 (i.e. 2x5) elements. As such, the "non-zero density" of adjacency sub-matrix 810s is 0.3 (i.e. 3/10). Adjacency sub-matrix $810_4$ comprises 3 elements representative of non-zero values, and a total of 10 (i.e. 5x2) elements. As such, the "non-zero density" of adjacency sub-matrix $810_4$ is 0.3 (i.e. 3/10). Adjacency sub-matrix $810_5$ comprises 2 elements representative of non-zero values, and a total of 4 (i.e. 2x2) elements. As such, the "non-zero density" of adjacency sub-matrix $810_5$ is 0.5 (i.e. 2/4). Thus, the "non-zero density" of the adjacency sub-matrices $810_1$, $810_2$ and $810_5$ is greater than the "non-zero density" of the adjacency matrix 802, but the "non-zero density" of the adjacency sub-matrices $810_3$ and $810_4$ is less than the "non-zero density" of the adjacency matrix 802. In other (more realistic) examples, it may be the case that the "non-zero density" of each and every adjacency sub-matrix is greater than the "non-zero density" of the adjacency matrix 802.

It is to be understood that the use of a hypergraph model in step S704 is not essential. Other methods exist for rearranging the rows and/or columns of the adjacency matrix 802 so as to gather the plurality of elements representative of non-zero values of the adjacency matrix into the one or more adjacency sub-matrices. For example, a hypergraph clustering algorithm or graph partitioning algorithm could alternatively be used for this purpose. As another example, the rearranging of the rows and columns of the adjacency matrix in step S704 could be performed by finding vertex separators on a net intersection graph of the hypergraph model. A person skilled in the art would understand how these different techniques could be used to rearrange the rows and columns of the adjacency matrix in step S704.

As described above, if the received GCN is not a symmetric matrix (e.g. if the received GCN represents the connectivity of the nodes of a directed graph) then some of the values of the adjacency matrix may have been altered to make it symmetric, so that it could be rearranged into the doubly-bordered block-diagonal matrix form. In these examples, step S704 may further comprise: when the rows and columns of the adjacency matrix have been reordered and the adjacency sub-matrices have been formed, if a value of the adjacency matrix was altered to determine the symmetric adjacency matrix, returning that value to zero in the adjacency matrix in the doubly-bordered block-diagonal matrix form. Alternatively, these non-zero values can be retained, with the GCN layer being configured to remove any contributions from those non-zero values after the matrix multiplications have been performed.

In step S706 the processor(s) 404 determines a compressed GCN comprising one or more compressed GCN layers, which are each configured to perform a compressed operation in dependence on the set of one or more adjacency sub-matrices. The compressed GCN comprises one or more compressed GCN layers, each corresponding to a respective GCN layer of the GCN received in step S702. As described above, each GCN layer of the received GCN is arranged to perform an operation by performing matrix multiplications using the adjacency matrix (A), a feature embedding matrix (H) and a weight matrix (W); and the corresponding compressed GCN layer of the compressed GCN is arranged to perform the compressed operation by performing matrix multiplications using the set of one or more adjacency sub-matrices, a set of one or more feature embedding sub-matrices representing (e.g. derived from) the feature embedding matrix, and the weight matrix.

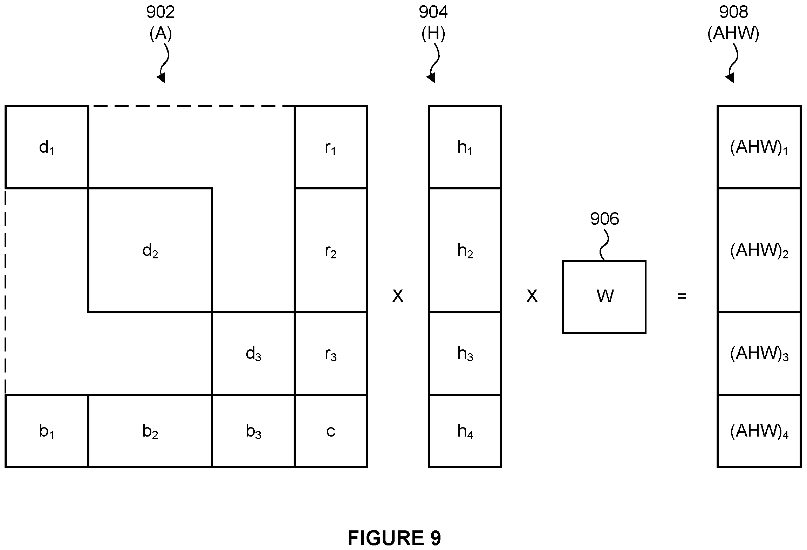

Figure 9 shows how a compressed operation can be performed by a compressed GCN layer using a plurality of sub-matrices. In this example, the adjacency matrix 902 has been permuted and partitioned (in step S704) into a set of 10 adjacency sub-matrices: three diagonal block arrays ($d_1$, $d_2$ and $d_3$), three horizontal border arrays at the bottom of the rearranged adjacency matrix ($b_1$, $b_2$ and $b_3$), three vertical border arrays at the right of the rearranged adjacency matrix ($r_1$, $r_2$ and $r_3$) and a corner border array at the bottom right of the rearranged adjacency matrix (c). The adjacency matrix is the only matrix which is assumed to be "sparse", whereas the feature embedding matrices and the weight matrices are assumed to be "dense". Rather than reordering the dense H and W matrices into sub-blocks, they are partitioned by just dividing them into sub-blocks with the same height as the vertical sub-blocks of the adjacency matrix which was partitioned above. As such, the rows of the feature embedding matrix 904 are permuted and partitioned into a set of one or more feature embedding sub-matrices ($h_1$, $h_2$, $h_3$ and $h_4$). The permutation and partitioning of the rows of the feature embedding matrix 904 match the permutation and partitioning of the columns of the adjacency matrix 902. The columns of the feature embedding matrix 904 are neither permuted nor partitioned. The weight matrix W 906 is not rearranged, i.e. the rows and the columns of the weight matrix 906 are neither permuted nor partitioned. The permutation and partitioning of the rows of the result of the matrix multiplication 908 match the permutation and partitioning of the rows of the feature embedding matrix 904.

No intermediate operations are needed between compressed GCN layers to reorder elements in the result matrix 908 (AHWj of a first compressed GCN layer to provide the set of one or more feature embedding sub-matrices representing the feature embedding matrix (H) for the next compressed GCN layer. No reordering (i.e. no permutation or repartitioning) is needed between layers, due to the symmetric doubly-bordered matrix form that is used for the adjacency matrix. In other words, the order and the partitioning of the rows and columns of the feature embedding matrix 904 is the same as the order and the partitioning of the rows and columns of the result matrix 908, for each compressed GCN layer in the compressed GCN.

It is noted that in some other examples, rather than using a doubly-bordered matrix form for the adjacency matrix, a singly-bordered matrix form could be used for the adjacency matrix. In those examples, the ordering and partitioning of the rows of the adjacency matrix does not (normally) match the ordering and partitioning of the columns of the adjacency matrix. Therefore, since the ordering and partitioning of the rows of the feature embedding matrix matches the ordering and partitioning of the columns of the adjacency matrix, the ordering and partitioning of the rows of the feature embedding matrix does not (normally) match the ordering and partitioning of the rows of the adjacency matrix. Furthermore, the ordering and partitioning of the rows of the feature embedding matrix would not (normally) match the ordering and partitioning of the rows of the result matrix (AHW), so it would be necessary to perform a permutation in between each pair of GCN layers, to reorder and repartition the rows of the result matrix from one GCN layer to provide the feature embedding matrix for the next GCN layer. In this way, the output matrix from one GCN layer would be permuted so that the rows of the output matrix of one GCN layer are reordered and repartitioned to reflect the column partitioning of the adjacency matrix before being used as the input (i.e. as the set of one or more feature embedding sub-matrices) for the next GCN layer.

Matrix multiplication involving sparse partitioned matrices (i.e. using sub-matrices determined from sparse matrices) is more efficient (i.e. involves fewer MAC operations) than regular matrix multiplication. The set of sub-matrices of the result (AHW) of the matrix multiplication illustrated in Figure 9 are mathematically given by:

$$(AHW)_1 = (d_1 h_1 + r_1 h_4)W$$

$$(AHW)_2 = (d_2 h_2 + r_2 h_4)W$$

$$(AHW)_3 = (d_3 h_1 + r_3 h_4)W$$

$$(AHW)_4 = (b_1 h_1 + b_2 h_2 + b_3 h_3 + ch_4)W.$$

In the example shown in Figure 9 the rows and columns of the adjacency matrix, the rows of the feature embedding matrix and the rows of the result matrix are each partitioned into four parts. In other examples, the rows and columns of the adjacency matrix, the rows of the feature embedding matrix and the rows of the result matrix are each partitioned into a different number of parts, e.g. greater than or less than four parts. The number of partitions is implementation dependent. Generally, more partitions means a higher non-zero density in the adjacency sub-matrices, and a lower number of MAC operations. However, too many partitions can result in underutilisation of the processing logic of the system that implements the GCN. As such, there is a trade-off to be made in determining the number of partitions.

Generalising the equations given above to a GCN in which the rows and columns of the adjacency matrix, the rows of the feature embedding matrix and the rows of the result matrix are each partitioned into P parts gives:

for i from 1 to P - 1: $(AHW)_i = (d_i h_i + r_i h_P)W$,
for j from 1 to P - 1: $(AHW)_P = (ch_P + \Sigma b_j h_j)W$.

Returning to Figure 7, in step S708, the processor(s) 404 outputs a compressed GCN. The compressed GCN comprises a compressed GCN layer arranged to perform a compressed operation in dependence on the set of one or more sub-matrices formed in step S704. The compressed GCN layer is arranged to perform the same type of operation that the corresponding GCN layer is arranged to perform. In particular, the compressed GCN layer is arranged to output a result representing a result of multiplying the adjacency matrix, the feature embedding matrix and the weight matrix. That said, the compressed layer is arranged to perform that operation in dependence on the one or more adjacency sub-matrices formed in step S704, e.g. rather than being arranged to perform that type of operation in dependence on the full adjacency matrix. It is noted that the elements (with a value of zero) of the adjacency matrix that are not included in one of the adjacency sub-matrices are not used by the compressed GCN layer. Since all of the elements that are not included in the adjacency sub-matrices have a value of zero, no "information" is lost by the compressed layer not using these elements. In other words, the compression is lossless compression. That is, the method of compressing a GCN described herein is a method of losslessly compressing a GCN. In particular, the GCN layer is losslessly compressed. As such, the GCN is losslessly compressed.

It is noted that where the GCN network received in step S702 comprises a plurality of GCN layers, the compressed GCN comprises a plurality of compressed GCN layers, with each compressed GCN layer corresponding to a respective one of the GCN layers of the received GCN. As described above, the adjacency matrix is the same for all of the plurality of GCN layers of the received GCN; and likewise, the set of one or more adjacency sub-matrices is the same for all of the plurality of compressed GCN layers of the compressed GCN. It is noted that the processing between layers of the compressed GCN may be the same as the processing between layers of the received GCN. That is, the compressed GCN may be configured to process an output of a first of the compressed GCN layers to determine an input for a second of the compressed GCN layers in the compressed GCN. When a symmetric doubly-bordered matrix form is used for the adjacency matrix, the processing of the output of the first of the compressed GCN layers might not comprise performing a permute operation on the output of the first of the compressed GCN layers. For example, the processing of the output of the first of the compressed GCN layers may comprise (only) applying an activation function, e.g. using the activation logic 310. As described above, the input for the second of the compressed GCN layers is a set of one or more feature embedding sub-matrices representing a feature embedding matrix for the second of the compressed GCN layers.

Although no permutation of the output of one compressed GCN layer is required in order to determine the input for the next compressed GCN layer in the compressed GCN, the compressed GCN is (usually) configured to permute an output of the final compressed GCN layer to reverse the permutation caused by the rearranging of the rows and columns of the adjacency matrix. In this way, the output from the compressed GCN is a matrix with elements ordered in the same way as if the GCN had not been compressed.

The compressed GCN that is output in step S708 may be stored for subsequent implementation. For example, the processor(s) 404 may write the compressed GCN into the memory 406 of the processing system 400 for subsequent implementation. The stored GCN may be subsequently implemented on the system 402. For example, step S708 may comprise outputting a computer readable description of the compressed GCN that, when implemented at the system 402, causes the compressed GCN to be executed. The data defining the compressed GCN comprises data defining the set of one or more adjacency sub-matrices, data defining the weight matrix (W) for each of the one or more compressed GCN layers, data defining any other components of the compressed GCN such as activation functions to be implemented between consecutive compressed GCN layers in the compressed GCN, and data defining the configuration of the compressed GCN layers (e.g. data defining the multiplication order for the compressed GCN layers). For example, the compressed GCN may be used to perform image processing. Performing image processing using the compressed GCN may comprise: receiving (e.g. at the hardware logic) image data representing one or more images; processing said image data using the compressed GCN (e.g. as implemented at the hardware logic); and generating (e.g. at the hardware logic) an output representative of the processing of said image data. In an example, said image processing may comprise image classification. In image classification, image data representing one or more images may be input to the compressed GCN, and the output of that compressed GCN may be data indicative of a probability (or set of probabilities) that each of those images belongs to a particular classification (or set of classifications). That is, the computations performed in the layers of the compressed GCN may enable characteristic features (e.g. low level features such as edges) of the input data to be identified, and predictions to be made as to which classification (or set of classifications) the one or more images represented by that input data belongs to.

Compressing the received GCN in accordance with the methods described herein with reference to Figure 7 is advantageous because only a subset of the elements of the adjacency matrix of the received GCN are used by the compressed GCN. That is, only the subset of the elements of the adjacency matrix that are included in the set of one or more adjacency sub-matrices formed in step S704 are used by the compressed GCN. The other elements of the adjacency matrix that are not comprised by the one or more adjacency sub-matrices formed in step S704 are not used by the compressed GCN. This means that, when implementing the compressed GCN, e.g. at a neural network accelerator (NNA) 408, those other elements of the adjacency matrix need not be stored in memory. This reduces the memory footprint of the compressed GCN relative to the received GCN. As such, the data representing the compressed GCN can be stored in memory more efficiently than the received GCN. Further, this means that fewer elements of the adjacency matrix need to be read into the NNA at run-time in order to implement the compressed GCN, relative to the uncompressed GCN. This reduces the memory bandwidth required to implement the compressed GCN, relative to the uncompressed GCN. For the same reason, the time taken to read in the data defining the compressed GCN from memory is also reduced, relative to the uncompressed GCN. This can reduce the latency of the compressed GCN, relative to the uncompressed GCN. Using fewer elements of the adjacency matrix also reduces the computational demand on the NNA implementing the compressed GCN - by reducing the number of MAC operations to be performed - again, relative to implementing the uncompressed GCN.

We have described above techniques for configuring a GCN with reference to Figures 5 and 6, and techniques for compressing a GCN with reference to Figures 7 to 9. These techniques may be implemented separately. However, they may also be combined.

As noted above, the adjacency matrix usually has more elements than the feature embedding matrix and than the weight matrix for a GCN layer. It is also the case that the set of one or more adjacency sub-matrices would usually have more elements than the set of one or more feature embedding matrices and than the weight matrix for a compressed GCN layer (although this may depend on the number of vertex features). As such, when the GCN is being compressed, it can also be beneficial to optimise the order in which the matrix multiplications are performed in the compressed GCN layers. Figure 10 is a flow chart for a combined method of configuring and compressing a GCN.

In step S1002, the processor(s) 404 receives a GCN comprising one or more GCN layers. The received GCN may be a trained GCN. As described above, each of the one or more GCN layers of the GCN is arranged to perform an operation in dependence on an adjacency matrix, a feature embedding matrix and a weight matrix.

In step S1003, the processor(s) 404 rearranges the rows and columns of the adjacency matrix so as to gather the plurality of non-zero values of the adjacency matrix 802 into a set of one or more adjacency sub-matrices. Step S1003 can be performed in the same way as step S704 described above. As described above, the set of one or more adjacency sub-matrices has a greater average density of non-zero values than the adjacency matrix. As described above, the rearranging of the rows and columns of the adjacency matrix in step S704 may be performed in dependence on a hypergraph model, e.g. as described above with reference to Figures 8A to 8C. As well as rearranging the adjacency matrix into the set of one or more adjacency sub-matrices, the rows of the feature embedding matrix for a compressed GCN layer are partitioned into a set of one or more feature embedding sub-matrices. The set of one or more feature embedding sub-matrices represents the feature embedding matrix for the compressed GCN layer.

Steps S1004 to S1012 are performed for each of the one or more compressed GCN layers in the compressed GCN. Each of the one or more compressed GCN layers of the compressed GCN is arranged to determine a result representing a result of performing a matrix multiplication operation ($A \times H \times W$) of the adjacency matrix (A), a feature embedding matrix (H) and a weight matrix (W). Each of the one or more compressed GCN layers is arranged to determine the result using the set of one or more adjacency sub-matrices, the set of one or more feature embedding sub-matrices for the compressed GCN layer and the weight matrix for the compressed GCN layer. Although the result is not affected by the order in which the matrix multiply operations are performed, the amount of work involved in determining the result may be affected by the multiplication order. As described above, the multiplication order that involves less work (e.g. fewer MAC operations) depends on the relative row/column dimensions of the weight matrix (W) for the compressed GCN layer.

In step S1004, the processor(s) 404 determines whether the weight matrix for the compressed GCN layer comprises more rows than columns. If it is determined that the weight matrix for the compressed GCN layer comprises more rows than columns then the method passes to step S1006. If it is determined that the weight matrix for the compressed GCN layer comprises more columns than rows then the method passes to step S1008. In the example shown in Figure 10, if the weight matrix for the compressed GCN layer comprises the same number of rows and columns (i.e. if W is a square matrix) then the method passes to step S1008. However, in other examples, step S1004 may have involved determining whether the weight matrix for the compressed GCN layer comprises more columns than rows, and in those examples if the weight matrix for the compressed GCN layer comprises the same number of rows and columns (i.e. if W is a square matrix) then the method would pass to step S1006. Step S1004 can be performed in the same way as step S504 described above.

In step S1006, in response to determining that the weight matrix comprises more rows than columns, the processor(s) 404 configures the compressed GCN such that the compressed GCN layer is configured to multiply the set of one or more feature embedding sub-matrices by the weight matrix so as to form a first set of one or more intermediate sub-matrices, and subsequently multiply the set of one or more adjacency sub-matrices by the first set of one or more intermediate sub-matrices. The result of performing these multiplications represents a result of multiplying the adjacency matrix, the feature embedding matrix and the weight matrix. For example, if the feature embedding matrix 904 is partitioned into the four feature embedding sub-matrices ($h_1$, $h_2$, $h_3$ and $h_4$) shown in Figure 9, then the first set of one or more intermediate sub-matrices (($HW)_1$, ($HW)_2$, ($HW)_3$ and ($HW)_4$) will be determined as:

$$(HW)_1 = h_1 W$$

$$(HW)_2 = h_2 W$$

$$(HW)_3 = h_3 W$$

$$(HW)_4 = h_4 W.$$

If the adjacency matrix 902 is rearranged into the ten adjacency sub-matrices ($d_1$, $d_2$, $d_3$, $b_1$, $b_2$, $b_3$, $r_1$, $r_2$, $r_3$ and c) shown in Figure 9, then in step S1006 the set of one or more sub-matrices representing the result of the matrix multiplication (($AHW)_1$, ($AHW)_2$, ($AHW)_3$ and ($AHW)_4$) will be determined as:

$$(AHW)_1 = d_1 (HW)_1 + r_1 (HW)_4$$

$$(AHW)_2 = d_2 (HW)_2 + r_2 (HW)_4$$

$$(AHW)_3 = d_3 (HW)_3 + r_3 (HW)_4$$

$$(AHW)_4 = b_1 (HW)_1 + b_2 (HW)_2 + b_3 (HW)_3 + c (HW)_4.$$

Generalising the equations given above to a compressed GCN in which the rows and columns of the adjacency matrix, the rows of the feature embedding matrix and the rows of the result matrix are each partitioned into P parts, in the first operation of step S1006, the first set of one or more intermediate sub-matrices ($(HW)_i$) would be determined as $(HW)_i = h_iW$ for $i$ from 1 to $P$, and in the second operation of step S1006, the set of one or more sub-matrices representing the result of the matrix multiplication would be determined as:

for $i$ from 1 to $P$ - 1: $(AHW)_i = d_i(HW)_i + r_i(HW)_P$,
for $j$ from 1 to $P$ - 1: $(AHW)_P = c(HW)_P + \Sigma b_j(HW)_j$.

Following step S1006 the method passes to step S1010, such that step S1008 is not performed if the weight matrix comprises more rows than columns.

In step S1008, in response to determining that the weight matrix comprises more columns than rows, the processor(s) 404 configures the compressed GCN such that the compressed GCN layer is configured to multiply the set of one or more adjacency sub-matrices by the set of one or more feature embedding sub-matrices so as to form a second set of one or more intermediate sub-matrices, and subsequently multiply the second set of one or more intermediate sub-matrices by the weight matrix. The result of performing these multiplications represents a result of multiplying the adjacency matrix, the feature embedding matrix and the weight matrix. For example, if the adjacency matrix 902 is rearranged into the ten adjacency sub-matrices ($d_1$, $d_2$, $d_3$, $b_1$, $b_2$, $b_3$, $r_1$, $r_2$, $r_3$ and c), and if the feature embedding matrix 904 is partitioned into the four feature embedding sub-matrices ($h_1$, $h_2$, $h_3$ and $h_4$) shown in Figure 9, then the second set of one or more intermediate sub-matrices ($(AH)_1$, $(AH)_2$, $(AH)_3$ and $(AH)_4$) will be determined as:

$$(AH)_1 = d_1 h_1 + r_1 h_4$$

$$(AH)_2 = d_2 h_2 + r_2 h_4$$

$$(AH)_3 = d_3 h_1 + r_3 h_4$$

$$(AH)_4 = b_1 h_1 + b_2 h_2 + b_3 h_3 + c h_4.$$

Then in step S1008 the set of one or more sub-matrices representing the result of the matrix multiplication ($(AHW)_1$, $(AHW)_2$, $(AHW)_3$ and $(AHW)_4$) will be determined as:

$$(AHW)_1 = (AH)_1 W$$

$$(AHW)_2 = (AH)_2 W$$

$$(AHW)_3 = (AH)_3 W$$

$$(AHW)_4 = (AH)_4 W.$$

Generalising the equations given above to a compressed GCN in which the rows and columns of the adjacency matrix, the rows of the feature embedding matrix and the rows of the result matrix are each partitioned into $P$ parts, in the first operation of step S1008, the second set of one or more intermediate sub-matrices ($(AH)_i$) would be determined as:

for $i$ from 1 to $P$ - 1: $(AH)_i = d_i h_i + r_i h_P$,
for $j$ from 1 to $P$ - 1: $(AH)_P = c h_P + \Sigma b_j h_j$,

and in the second operation of step S1008, the set of one or more sub-matrices representing the result of the matrix multiplication would be determined as $(AHW)_i = (AH)_iW$ for $i$ from 1 to $P$.

Following step S1008 the method passes to step S1010, such that step S1006 is not performed if the weight matrix comprises more columns than rows.

In summary of steps S1004, S1006 and S1008: if the weight matrix for the compressed GCN layer comprises more rows than columns, then the compressed GCN layer is configured to multiply the set of one or more feature embedding sub-matrices by the weight matrix so as to form a first set of one or more intermediate sub-matrices, and subsequently multiply the set of one or more adjacency sub-matrices by the first set of one or more intermediate sub-matrices; and if the weight matrix for the compressed GCN layer comprises more columns than rows, then the compressed GCN layer is configured to multiply the set of one or more adjacency sub-matrices by the set of one or more feature embedding sub-matrices so as to form a second set of one or more intermediate sub-matrices, and subsequently multiply the second set of one or more intermediate sub-matrices by the weight matrix.

In step S1010, the processor(s) 404 determines whether there is another compressed GCN layer in the compressed GCN to be configured. If it is determined in step S1010 that there is another compressed GCN layer in the compressed GCN to be configured then the method passes to step S1012. Step S1010 can be performed in the same way as step S510 described above.

In step S1012 the processor(s) 404 configures the compressed GCN to process an output of the current compressed GCN layer to determine a set of one or more feature embedding sub-matrices representing a feature embedding matrix for the next compressed GCN layer in the compressed GCN. The processing of the output of the first compressed GCN layer in step S1012 may comprise applying an activation function, e.g. using the activation logic 310. As shown in Figure 3, the activation logic 310 may be a rectified linear unit The processing of the output of the first compressed GCN layer might comprise only applying the activation function, i.e. it might be the case that no other processing is performed on the output of the first compressed GCN layer in order to determine the set of one or more feature embedding sub-matrices for the second compressed GCN layer. In particular, the processing of the output of the first compressed GCN layer does not comprise performing a permute operation on the output of the first compressed GCN layer. Step S1012 can be performed in the same way as step S512 described above.

Following step S1012 the next compressed GCN layer is considered and the method passes back to step S1004. Steps S1004 to S1012 are performed for each of the compressed GCN layers of the compressed GCN.

If it is determined in step S1010 that there is not another compressed GCN layer in the compressed GCN to be configured then the method passes to step S1013. In step S1013 the processor(s) 404 configures the compressed GCN to permute an output of the final compressed GCN layer to reverse the permutation caused by the rearranging of the rows and columns of the adjacency matrix that was performed in step S1003. In this way, the output from the compressed GCN is a matrix with elements ordered in the same way as if the GCN had not been compressed.

In step S1014 the configured and compressed GCN is stored for subsequent implementation. For example, the configured and compressed GCN may be stored in the memory 406 of the processing system 400. The stored GCN may be subsequently implemented on the system 402. For example, step S1014 may comprise outputting a computer readable description of the configured and compressed GCN that, when implemented at the system 402, causes the configured and compressed GCN to be executed. For example, the configured and compressed GCN may be used to perform image processing. Performing image processing using the configured and compressed GCN may comprise: receiving (e.g. at the hardware logic) image data representing one or more images; processing said image data using the configured and compressed GCN (e.g. as implemented at the hardware logic); and generating (e.g. at the hardware logic) an output representative of the processing of said image data. In an example, said image processing may comprise image classification. In image classification, image data representing one or more images may be input to the configured and compressed GCN, and the output of that compressed GCN may be data indicative of a probability (or set of probabilities) that each of those images belongs to a particular classification (or set of classifications). That is, the computations performed in the layers of the configured and compressed GCN may enable characteristic features (e.g. low level features such as edges) of the input data to be identified, and predictions to be made as to which classification (or set of classifications) the one or more images represented by that input data belongs to.

As described above, it may be the case that the weight matrix for one or more of the compressed GCN layers is wide whilst the weight matrix for one or more other compressed GCN layers is tall. Therefore, one or more of the compressed GCN layers in a compressed GCN may be configured (in step S1006) to determine the first set of one or more intermediate sub-matrices and then determine a result of multiplying the set of one or more adjacency sub-matrices by the first set of one or more intermediate sub-matrices, whilst a different one or more of the compressed GCN layers in the same compressed GCN may be configured (in step S1008) to determine the second set of one or more intermediate sub-matrices and then determine a result of multiplying the second set of one or more intermediate sub-matrices by the weight matrix.

The way in which the multiplication order of a GCN layer can be optimised to reduce the number of MAC operations that are performed in the GCN layer is similar in the examples shown in Figures 5 and 10 (for which the GCN is respectively not compressed and compressed).

For example, if the GCN is not compressed (e.g. in the example shown in Figure 5), the first intermediate result is a first intermediate matrix (HW) and the second intermediate result (AH) is a second intermediate matrix. In those examples, the GCN is configured (in step S506) in response to determining (in step S504) that the weight matrix for a GCN layer comprises more rows than columns such that the GCN layer is configured to determine the first intermediate matrix (HW) by multiplying the feature embedding matrix (H) by the weight matrix (W), and subsequently use the determined first intermediate matrix (HW) to determine the full result (AHW) by multiplying the adjacency matrix (A) by the first intermediate matrix (HW). Furthermore, in those examples, the GCN is configured (in step S508) in response to determining (in step S504) that the weight matrix for a GCN layer comprises more columns than rows such that the GCN layer is configured to determine the second intermediate matrix (AH) by multiplying the adjacency matrix (A) by the feature embedding matrix (H), and subsequently use the determined second intermediate matrix (AH) to determine the full result (AHW) by multiplying the second intermediate matrix (AH) by the weight matrix (W).

In comparison, if the GCN is compressed (e.g. in the example shown in Figure 10) the adjacency matrix is represented with a set of one or more adjacency sub-matrices, the feature embedding matrix is represented with a set of one or more feature embedding sub-matrices, the first intermediate result is a first set of one or more intermediate sub-matrices and the second intermediate result is a second set of one or more intermediate sub-matrices. In those examples, the compressed GCN is configured (in step S1006) in response to determining (in step S1004) that the weight matrix for a compressed GCN layer comprises more rows than columns such that the compressed GCN layer is configured to determine the first set of one or more intermediate sub-matrices by multiplying the set of one or more feature embedding sub-matrices by the weight matrix, and subsequently use the determined first set of one or more intermediate sub-matrices to determine the full result by multiplying the set of one or more adjacency sub-matrices by the first set of one or more intermediate sub-matrices. Furthermore, in those examples, the compressed GCN is configured (in step S1008) in response to determining (in step S1004) that the weight matrix for a compressed GCN layer comprises more columns than rows such that the compressed GCN layer is configured to determine the second set of one or more intermediate sub-matrices by multiplying the set of one or more adjacency sub-matrices by the set of one or more feature embedding sub-matrices, and subsequently use the determined second set of one or more intermediate sub-matrices to determine the full result by multiplying the second set of one or more intermediate sub-matrices by the weight matrix.

After the GCN has been configured and/or compressed, the configured and/or compressed GCN may be implemented on the system 402. To give some examples, the configured and/or compressed GCN may be used to perform one of: image processing, text processing, speech processing, traffic forecasting, lane detection, providing a recommendation (e.g. a product recommendation) to a user, molecular property prediction, prediction of a malicious user in a social network, and controlling or assisting in the control of a vehicle.

The system 402 comprises hardware logic 408 configured to implement the configured and/or compressed GCN. The hardware logic 408 may comprise a neural network accelerator (NNA) and/or a graphics processing unit (GPU). Figure 11 shows the system 402 for implementing the configured and/or compressed GCN in an example in which the hardware logic 408 of the system 402 is implemented as an NNA.

System 402 comprises hardware components (e.g. hardware logic, such as processing elements implemented in hardware) and software components (e.g. firmware, and the procedures and tasks for execution at the hardware logic). System 402 comprises the NNA 408, which may be implemented in hardware. NNA 408 can be configured to execute the operations to be performed by the layers of a GCN.

In further detail, system 402 comprises input 1101 for receiving input data. For example, when the GCN being implemented is configured to perform image processing, the input data may include image data representing one or more images. For example, for an RGB image, the image data may be in the format $C_{in} \times H_a \times W_a$, where $H_a$ and $W_a$ are the pixel dimensions of the image across three input colour channels $C_{in}$ (i.e. R, G and B). The input data received at input 1101 also includes the data defining the GCN.

The input data received at input 1101 may be written to a memory 1104 comprised by system 402. Memory 1104 may be accessible to the NNA 408. Memory 1104 may be a system memory accessible to the NNA 408 over a data bus. NNA 408 may be implemented on a chip (e.g. semiconductor die and/or integrated circuit package) and memory 1104 may not be physically located on the same chip as NNA 408. As such, memory 1104 may be referred to as "off-chip memory" and/or "external memory". Memory 1104 may be coupled to an input buffer 1106 at the NNA 408 so as to provide input data to the NNA 408.

Input buffer 1106 may be arranged to store input data required by the NNA 408. The various buffers of the NNA 408 shown in Figure 11 may be implemented in any suitable manner - e.g. as any number of data stores which are local to the NNA 408 (e.g. on the same semiconductor die and/or provided within the same integrated circuit package) or accessible to the NNA 408 over a data bus or other interconnect.

In Figure 11, system 402 also comprises a memory 1128 for storing at least some of the data used by the GCN being implemented at the NNA 408. NNA 408 may be implemented on a chip (e.g. semiconductor die and/or integrated circuit package) and memory 1128 may be physically located on the same chip (e.g. semiconductor die and/or integrated circuit package) as NNA 408. As such, memory 1128 may be referred to as "on-chip memory" and/or "local memory". Data stored in the on-chip memory 1128 may be accessed by the NNA 408 without consuming memory bandwidth to the off-chip memory 1104. That said, on-chip memory 1128 may not have sufficient storage space so as to simultaneously store all of the data used to implement a GCN. Thus, subsets of the data may be periodically written into the on-chip memory 1128 from off-chip memory 1104. The input buffer 1106 may be configured to receive input data from the on-chip memory 1128 so as to reduce the bandwidth between the off-chip memory 1104 and the input buffer 1106.

In Figure 11, NNA 408 includes input buffer 1106, a plurality of multiplication engines 1108, a plurality of accumulators 1110, an accumulation buffer 1112, and an output buffer 1116. Each multiplication engine 1108, together with its respective accumulator 1110 and its share of the resources of the accumulation buffer 1112, represents a processing element 1114 of the NNA 408. Three processing elements 1114 are shown in Figure 11 but in general there may be any number.

Each processing element 1114 may receive a set of input values from input buffer 1106. By operating on the sets of input values, the processing elements are operable to perform the operations of the layers of a GCN. The processing elements 1114 of NNA 408 may be independent processing subsystems of the NNA 408 which can operate in parallel.

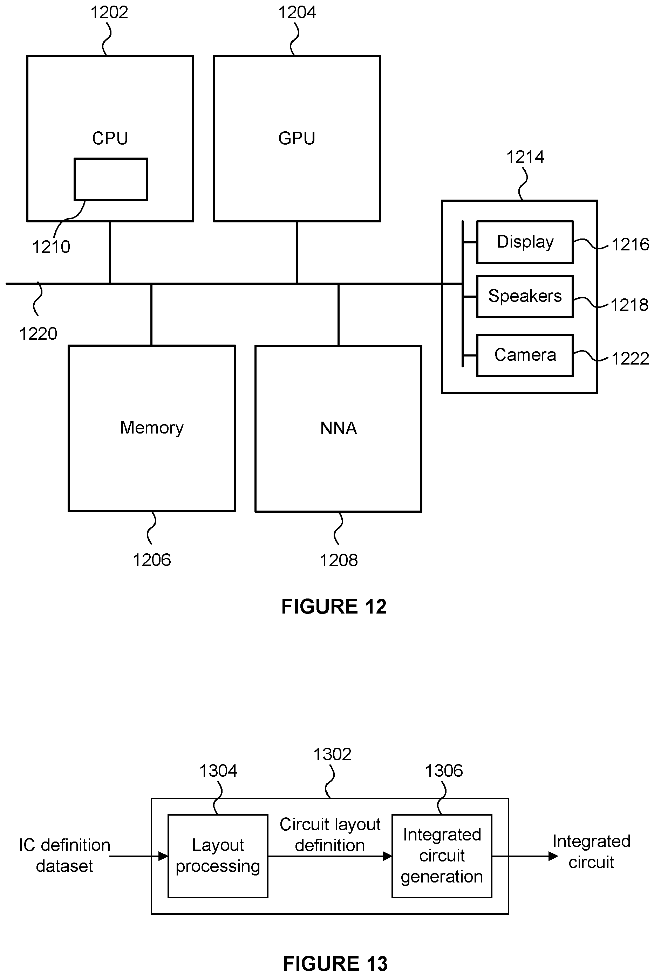

Figure 12 shows a computer system in which the processing systems described herein may be implemented. The computer system comprises a CPU 1202, a GPU 1204, a memory 1206 (e.g. equivalent to memory 1104 shown in Figure 11), a neural network accelerator (NNA) 1208 (e.g. equivalent to neural network accelerator (NNA) 408 shown in Figure 11), and other devices 1214, such as a display 1216, speakers 1218 and a camera 1222 (e.g. equivalent to input 1101 shown in Figure 11). A processing block 1210 (corresponding to the processor(s) 404 of the processing system 400) is implemented on the CPU 1202. In other examples, the processing block 1210 could be implemented on the GPU 1204 or the NNA 1208. The GPU 1204 may comprise specific hardware logic, for example equivalent to NNA 1208, for accelerating (at least aspects of) the implementation of neural networks. It is to be understood that one or more of the depicted components may be omitted from the system. The components of the computer system can communicate with each other via a communications bus 1220.

The processing system 400 and the system 402 are shown as comprising a number of functional blocks. This is schematic only and is not intended to define a strict division between different logic elements of such entities. Each functional block may be provided in any suitable manner. It is to be understood that intermediate values described herein as being formed by the at least one processor 404 need not be physically generated by the at least one processor at any point and may merely represent logical values which conveniently describe the processing performed by the at least one processor between its input and output.

The processing systems described herein may be embodied in hardware on an integrated circuit. The processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing system configured to perform any of the methods described herein, or to manufacture a processing system comprising any apparatus described herein. An integrated circuit definition dataset may be, for example, an integrated circuit description.

Therefore, there may be provided a method of manufacturing, at an integrated circuit manufacturing system, a processing system as described herein. Furthermore, there may be provided an integrated circuit definition dataset that, when processed in an integrated circuit manufacturing system, causes the method of manufacturing a processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processing system will now be described with respect to Figure 13.

Figure 13 shows an example of an integrated circuit (IC) manufacturing system 1302 which is configured to manufacture a processing system as described in any of the examples herein. In particular, the IC manufacturing system 1302 comprises a layout processing system 1304 and an integrated circuit generation system 1306. The IC manufacturing system 1302 is configured to receive an IC definition dataset (e.g. defining a processing system as described in any of the examples herein), process the IC definition dataset, and generate an IC according to the IC definition dataset (e.g. which embodies a processing system as described in any of the examples herein). The processing of the IC definition dataset configures the IC manufacturing system 1302 to manufacture an integrated circuit embodying a processing system as described in any of the examples herein.

The layout processing system 1304 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1304 has determined the circuit layout it may output a circuit layout definition to the IC generation system 1306. A circuit layout definition may be, for example, a circuit layout description.

The IC generation system 1306 generates an IC according to the circuit layout definition, as is known in the art. For example, the IC generation system 1306 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1306 may be in the form of computer-readable code which the IC generation system 1306 can use to form a suitable mask for use in generating an IC.

The different processes performed by the IC manufacturing system 1302 may be implemented all in one location, e.g. by one party. Alternatively, the IC manufacturing system 1302 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 13 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 13, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

ANNEX

Some numbered clauses are provided below, which form part of this disclosure:

101. A computer implemented method of configuring a graph convolutional network, the method comprising:

receiving a graph convolutional network comprising a graph convolutional network layer, said graph convolutional network layer being arranged to perform an operation in dependence on an adjacency matrix, a feature embedding matrix and a weight matrix;
determining that the weight matrix comprises: (i) more rows than columns, or (ii) more columns than rows; and
in response to determining that the weight matrix comprises more rows than columns, configuring the graph convolutional network such that the graph convolutional network layer is configured to determine a first intermediate result representing a result of multiplying the feature embedding matrix and the weight matrix, and subsequently use the determined first intermediate result to determine a full result representing a result of multiplying the adjacency matrix, the feature embedding matrix and the weight matrix; or
in response to determining that the weight matrix comprises more columns than rows, configuring the graph convolutional network such that the graph convolutional network layer is configured to determine a second intermediate result representing a result of multiplying the adjacency matrix and the feature embedding matrix, and subsequently use the determined second intermediate result to determine the full result representing the result of multiplying the adjacency matrix, the feature embedding matrix and the weight matrix.

102. The method of clause 101 wherein the adjacency matrix has more elements than the feature embedding matrix and than the weight matrix.

103. The method of clause 101 or 102 wherein the adjacency matrix is a square matrix.

104. The method of any of clauses 101 to 103 wherein the graph convolutional network comprises a plurality of graph convolutional network layers, the plurality of graph convolutional network layers comprising said graph convolutional network layer and one or more further graph convolutional network layers.

105. The method of clause 104 further comprising, for each of the one or more further graph convolutional network layers:

determining that a weight matrix for the further graph convolutional network layer comprises: (i) more rows than columns, or (ii) more columns than rows; and
in response to determining that the weight matrix for the further graph convolutional network layer comprises more rows than columns, configuring the graph convolutional network such that the further graph convolutional network layer is configured to determine a first intermediate result for the further graph convolutional network layer representing a result of multiplying a feature embedding matrix for the further graph convolutional network layer and the weight matrix for the further graph convolutional network layer, and subsequently use the determined first intermediate result for the further graph convolutional network layer to determine a full result for the further graph convolutional network layer representing a result of multiplying an adjacency matrix, the feature embedding matrix and the weight matrix for the further graph convolutional network layer; or
in response to determining that the weight matrix for the further graph convolutional network layer comprises more columns than rows, configuring the graph convolutional network such that the further graph convolutional network layer is configured to determine a second intermediate result for the further graph convolutional network layer representing a result of multiplying the adjacency matrix for the further graph convolutional network layer and the feature embedding matrix for the further graph convolutional network layer, and subsequently use the determined second intermediate result for the further graph convolutional network layer to determine the full result for the further graph convolutional network layer representing the result of multiplying the adjacency matrix, the feature embedding matrix and the weight matrix for the further graph convolutional network layer.

106. The method of clause 105 wherein for at least one of the plurality of graph convolutional network layers it is determined that the weight matrix comprises more rows than columns, and wherein for at least one other one of the plurality of graph convolutional network layers it is determined that the weight matrix comprises more columns than rows.

107. The method of any of clauses 104 to 106 wherein the adjacency matrix is the same for all of the plurality of graph convolutional network layers.

108. The method of any of clauses 104 to 107 further comprising configuring the graph convolutional network to process an output of a first of the graph convolutional network layers to determine a feature embedding matrix for a second of the graph convolutional network layers in the graph convolutional network, wherein the processing of the output of the first of the graph convolutional network layers comprises applying an activation function.

109. The method of clause 108 wherein the processing of the output of the first of the graph convolutional network layers does not comprise performing a permute operation on the output of the first of the graph convolutional network layers.

110. The method of any preceding clause wherein the adjacency matrix is represented with a set of one or more adjacency sub-matrices, wherein the feature embedding matrix is represented with a set of one or more feature embedding sub-matrices, wherein the first intermediate result is a first set of one or more intermediate sub-matrices and the second intermediate result is a second set of one or more intermediate sub-matrices, and wherein:

said configuring the graph convolutional network in response to determining that the weight matrix comprises more rows than columns is such that the graph convolutional network layer is configured to determine the first set of one or more intermediate sub-matrices by multiplying the set of one or more feature embedding sub-matrices by the weight matrix, and subsequently use the determined first set of one or more intermediate sub-matrices to determine the full result by multiplying the set of one or more adjacency sub-matrices by the first set of one or more intermediate sub-matrices; and
said configuring the graph convolutional network in response to determining that the weight matrix comprises more columns than rows is such that the graph convolutional network layer is configured to determine the second set of one or more intermediate sub-matrices by multiplying the set of one or more adjacency sub-matrices by the set of one or more feature embedding sub-matrices, and subsequently use the determined second set of one or more intermediate sub-matrices to determine the full result by multiplying the second set of one or more intermediate sub-matrices by the weight matrix.

111. The method of any of clauses 101 to 109 wherein the first intermediate result is a first intermediate matrix and the second intermediate result is a second intermediate matrix, and wherein:

said configuring the graph convolutional network in response to determining that the weight matrix comprises more rows than columns is such that the graph convolutional network layer is configured to determine the first intermediate matrix by multiplying the feature embedding matrix by the weight matrix, and subsequently use the determined first intermediate matrix to determine the full result by multiplying the adjacency matrix by the first intermediate matrix; and
said configuring the graph convolutional network in response to determining that the weight matrix comprises more columns than rows is such that the graph convolutional network layer is configured to determine the second intermediate matrix by multiplying the adjacency matrix by the feature embedding matrix, and subsequently use the determined second intermediate matrix to determine the full result by multiplying the second intermediate matrix by the weight matrix.

112. The method of any of clauses 101 to 110 wherein said adjacency matrix comprises a plurality of non-zero values and a plurality of zero values, and wherein the method further comprises compressing the graph convolutional network, said compressing the graph convolutional network comprising:

rearranging the rows and columns of the adjacency matrix so as to gather the plurality of non-zero values of the adjacency matrix into a set of one or more adjacency sub-matrices, the set of one or more adjacency sub-matrices having a greater average density of non-zero values than the adjacency matrix; and
outputting a compressed graph convolutional network comprising a compressed graph convolutional network layer arranged to perform a compressed operation in dependence on the set of one or more adjacency sub-matrices.

113. The method of clause 112 wherein the set of one or more adjacency sub-matrices comprises a subset of the values of the adjacency matrix, and wherein:

the graph convolutional network layer of the received graph convolutional network is arranged to perform the operation by performing matrix multiplications using the adjacency matrix, the feature embedding matrix and the weight matrix; and
the compressed graph convolutional network layer of the compressed graph convolutional network is arranged to perform the compressed operation by performing matrix multiplications using the set of one or more adjacency sub-matrices, a set of one or more feature embedding sub-matrices representing the feature embedding matrix, and the weight matrix.

114. The method of clause 113 wherein:

if the weight matrix comprises more rows than columns, then the compressed graph convolutional network layer is configured to multiply the set of one or more feature embedding sub-matrices by the weight matrix so as to form a first set of one or more intermediate sub-matrices, and subsequently multiply the set of one or more adjacency sub-matrices by the first set of one or more intermediate sub-matrices; and
if the weight matrix comprises more columns than rows, then the compressed graph convolutional network layer is configured to multiply the set of one or more adjacency sub-matrices by the set of one or more feature embedding sub-matrices so as to form a second set of one or more intermediate sub-matrices, and subsequently multiply the second set of one or more intermediate sub-matrices by the weight matrix.

115. The method of any of clauses 112 to 114 wherein said rearranging the rows and columns of the adjacency matrix comprises:

performing permutations of the rows and of the columns of the adjacency matrix; and
partitioning the rows and columns of the permuted adjacency matrix to determine the set of one or more adjacency sub-matrices,
wherein said performing permutations of the rows and of the columns of the adjacency matrix comprises performing a symmetric permutation, and wherein the partitioning of the rows of the permuted adjacency matrix is the same as the partitioning of the columns of the permuted adjacency matrix.

116. The method of clause 115 wherein:

the rows of the feature embedding matrix are permuted and partitioned into a set of one or more feature embedding sub-matrices, wherein the permutation and partitioning of the rows of the feature embedding matrix match the permutation and partitioning of the columns of the adjacency matrix,
the columns of the feature embedding matrix are neither permuted nor partitioned, and
the rows and the columns of the weight matrix are neither permuted nor partitioned.

117. The method of any of clauses 112 to 116 wherein said rearranging the rows and columns of the adjacency matrix converts the adjacency matrix into a doubly-bordered block-diagonal matrix form which comprises: (i) a plurality of block arrays which are aligned along the diagonal of the adjacency matrix, (ii) one or more horizontal border arrays which are horizontally aligned across the adjacency matrix, and (iii) one or more vertical border arrays which are vertically aligned across the adjacency matrix, and

wherein the block arrays, the one or more horizontal border arrays and the one or more vertical border arrays are adjacency sub-matrices.

118. The method of any of clauses 112 to 117, wherein said rearranging the rows and columns of the adjacency matrix is performed in dependence on a hypergraph model.

119. The method of any of clauses 101 to 118 further comprising storing the configured graph convolutional network for subsequent implementation.

120. The method of any of clauses 101 to 119, further comprising outputting a computer readable description of the configured graph convolutional network that, when implemented at a system for implementing a neural network, causes the configured graph convolutional network to be executed.

121. The method of any of clauses 101 to 120, further comprising configuring hardware logic to implement the configured graph convolutional network.

122. The method of clause 121, wherein the hardware logic comprises a neural network accelerator.

123. The method according to any of clauses 101 to 122 further comprising using the configured graph convolutional network to perform one of: image processing, text processing, speech processing, traffic forecasting, lane detection, providing a recommendation to a user, molecular property prediction, prediction of a malicious user in a social network, and controlling or assisting in the control of a vehicle.

124. A processing system for configuring a graph convolutional network, the processing system comprising at least one processor configured to:

receive a graph convolutional network comprising a graph convolutional network layer, said graph convolutional network layer being arranged to perform an operation in dependence on an adjacency matrix, a feature embedding matrix and a weight matrix;
determine that the weight matrix comprises: (i) more rows than columns, or (ii) more columns than rows; and in response to determining that the weight matrix comprises more rows than columns, configure the graph convolutional network such that the graph convolutional network layer is configured to determine a first intermediate result representing a result of multiplying the feature embedding matrix and the weight matrix, and subsequently use the determined first intermediate result to determine a full result representing a result of multiplying the adjacency matrix, the feature embedding matrix and the weight matrix; or in response to determining that the weight matrix comprises more columns than rows, configure the graph convolutional network such that the graph convolutional network layer is configured to determine a second intermediate result representing a result of multiplying the adjacency matrix and the feature embedding matrix, and subsequently use the determined second intermediate result to determine the full result representing the result of multiplying the adjacency matrix, the feature embedding matrix and the weight matrix.

125. The processing system of clause 124 further comprising a memory, wherein the at least one processor is further configured to write the configured graph convolutional network into the memory for subsequent implementation.

126. The processing system of clause 124 or 125, the at least one processor being further configured to configure hardware logic to implement the configured graph convolutional network.

127. Computer readable code configured to cause the method of any of clauses 101 to 123 to be performed when the code is run.

128. A computer readable storage medium having encoded thereon computer readable code configured to cause the method of any of clauses 101 to 123 to be performed when the code is run.

201. A computer implemented method of compressing a graph convolutional network, the method comprising:

receiving a graph convolutional network comprising a graph convolutional network layer, said graph convolutional network layer being arranged to perform an operation in dependence on an adjacency matrix, said adjacency matrix comprising a plurality of non-zero values and a plurality of zero values;

rearranging the rows and columns of the adjacency matrix so as to gather the plurality of non-zero values of the adjacency matrix into a set of one or more adjacency sub-matrices, the set of one or more adjacency sub-matrices having a greater average density of non-zero values than the adjacency matrix; and

outputting a compressed graph convolutional network comprising a compressed graph convolutional network layer arranged to perform a compressed operation in dependence on the set of one or more adjacency sub-matrices.

202. The method of clause 201, wherein each of the one or more adjacency sub-matrices has a greater average density of non-zero values than the adjacency matrix.

203. The method of clause 201 or 202 wherein the graph convolutional network layer is arranged to perform an operation in dependence on the adjacency matrix, a feature embedding matrix and a weight matrix.

204. The method of clause 203 wherein the compressed graph convolutional network layer is arranged to output a result representing a result of multiplying the adjacency matrix, the feature embedding matrix and the weight matrix.

205. The method of clause 203 or 204 wherein the set of one or more adjacency sub-matrices comprise a subset of the values of the adjacency matrix, and wherein:

the graph convolutional network layer of the received graph convolutional network is arranged to perform the operation by performing matrix multiplications using the adjacency matrix, the feature embedding matrix and the weight matrix; and

the compressed graph convolutional network layer of the compressed graph convolutional network is arranged to perform the compressed operation by performing matrix multiplications using the set of one or more adjacency sub-matrices, a set of one or more feature embedding sub-matrices representing the feature embedding matrix, and the weight matrix.

206. The method of any of clauses 203 to 205 wherein the adjacency matrix has more elements than the feature embedding matrix and than the weight matrix.

207. The method of any of clauses 203 to 206, wherein a set of one or more feature embedding sub-matrices represents the feature embedding matrix, the method further comprising:

determining that the weight matrix comprises: (i) more rows than columns, or (ii) more columns than rows; and

in response to determining that the weight matrix comprises more rows than columns, configuring the compressed graph convolutional network such that the compressed graph convolutional network layer is configured to multiply the set of one or more feature embedding sub-matrices by the weight matrix so as to form a first set of one or more intermediate sub-matrices, and subsequently multiply the set of one or more adjacency sub-matrices by the first set of one or more intermediate sub-matrices; or

in response to determining that the weight matrix comprises more columns than rows, configuring the compressed graph convolutional network such that the compressed graph convolutional network layer is configured to multiply the set of one or more adjacency sub-matrices by the set of one or more feature embedding sub-matrices so as to form a second set of one or more intermediate sub-matrices, and subsequently multiply the second set of one or more intermediate sub-matrices by the weight matrix.

208. The method of any of clauses 201 to 207 wherein the adjacency matrix is a square matrix.

209. The method of any of clauses 201 to 208 wherein said rearranging the rows and columns of the adjacency matrix comprises:

performing permutations of the rows and of the columns of the adjacency matrix; and

partitioning the rows and columns of the permuted adjacency matrix to determine the set of one or more adjacency sub-matrices.

210. The method of clause 209 wherein said performing permutations of the rows and of the columns of the adjacency matrix comprises performing a symmetric permutation, and wherein the partitioning of the rows of the permuted adjacency matrix is the same as the partitioning of the columns of the permuted adjacency matrix.

211. The method of clause 210 when dependent upon clause 203 wherein the rows of the feature embedding matrix are permuted and partitioned into a set of one or more feature embedding sub-matrices, wherein the permutation and partitioning of the rows of the feature embedding matrix match the permutation and partitioning of the columns of the adjacency matrix.

212. The method of clause 211 wherein the columns of the feature embedding matrix are neither permuted nor partitioned, and wherein the rows and the columns of the weight matrix are neither permuted nor partitioned.

213. The method of any of clauses 201 to 212 wherein said rearranging the rows and columns of the adjacency matrix converts the adjacency matrix into a doubly-bordered block-diagonal matrix form which comprises: (i) a plurality of block arrays which are aligned along the diagonal of the adjacency matrix, (ii) one or more horizontal border arrays which are horizontally aligned across the adjacency matrix, and (iii) one or more vertical border arrays which are vertically aligned across the adjacency matrix, and
wherein the block arrays, the one or more horizontal border arrays and the one or more vertical border arrays are adjacency sub-matrices.

214. The method of any of clauses 201 to 213, wherein said rearranging the rows and columns of the adjacency matrix is performed in dependence on a hypergraph model.

215. The method of clause 214 when dependent upon clause 213 wherein said rearranging the rows and columns of the adjacency matrix, A, comprises:

determining a symmetric adjacency matrix, A', such that, for each of the values, $A[i, j]$, of the adjacency matrix:

if $A[i, j] = 0$ and $A[j, i] \# 0$, the corresponding value of the symmetric adjacency matrix, $A'[i, j]$, is non-zero, and
if $A[i, j] \# 0$ or $A[j,i] = 0$, the corresponding value of the symmetric adjacency matrix, $A'[i, j]$, is equal to $A[i, j]$;

using the hypergraph model to reorder and partition the rows and columns of the symmetric adjacency matrix into a singly-bordered block-diagonal matrix form which comprises one or more initial border arrays which are either horizontally or vertically aligned across the symmetric adjacency matrix;
if the one or more initial border arrays are horizontally aligned across the symmetric adjacency matrix, applying the row ordering to the columns of the singly-bordered block diagonal matrix to thereby determine the adjacency matrix in the doubly-bordered block-diagonal matrix form; and
if the one or more initial border arrays are vertically aligned across the symmetric adjacency matrix, applying the column ordering to the rows of the singly-bordered block diagonal matrix to thereby determine the adjacency matrix in the doubly-bordered block-diagonal matrix form.

216. The method of clause 215 wherein said rearranging the rows and columns of the adjacency matrix, A, further comprises, if a value of the adjacency matrix was altered to determine the symmetric adjacency matrix, returning that value to zero in the adjacency matrix in the doubly-bordered block-diagonal matrix form.

217. The method of clause 214, wherein said rearranging the rows and columns of the adjacency matrix is performed by finding vertex separators on a net intersection graph of the hypergraph model.

218. The method of any of clauses 201 to 217 wherein the graph convolutional network comprises a plurality of graph convolutional network layers, the plurality of graph convolutional network layers comprising said graph convolutional network layer and one or more further graph convolutional network layers, and
wherein the compressed graph convolutional network comprises a plurality of compressed graph convolutional network layers, the plurality of compressed graph convolutional network layers comprising said compressed graph convolutional network layer and one or more further compressed graph convolutional network layers.

219. The method of clause 218 wherein the adjacency matrix is the same for all of the plurality of graph convolutional network layers, and wherein the one or more adjacency sub-matrices are the same for all of the plurality of compressed graph convolutional network layers.

220. The method of clause 218 or 219 wherein the compressed graph convolutional network is configured to process an output of a first of the compressed graph convolutional network layers to determine an input for a second of the compressed graph convolutional network layers in the compressed graph convolutional network, wherein the processing of the output of the first of the compressed graph convolutional network layers does not comprise performing a permute operation on the output of the first of the compressed graph convolutional network layers.

221. The method of clause 220 wherein the processing of the output of the first of the compressed graph convolutional network layers comprises applying an activation function.

222. The method of clause 220 or 221 wherein the input for the second of the compressed graph convolutional network layers is a set of one or more feature embedding sub-matrices representing a feature embedding matrix for the second of the compressed graph convolutional network layers.

223. The method of any of clauses 218 to 222 wherein the compressed graph convolutional network is configured to permute an output of a final compressed graph convolutional network layer to reverse the permutation caused by said rearranging of the rows and columns of the adjacency matrix.

224. The method of any of clauses 201 to 223 further comprising storing the compressed graph convolutional network for subsequent implementation.

225. The method of any of clauses 201 to 224, further comprising outputting a computer readable description of the compressed graph convolutional network that, when implemented at a system for implementing a neural network, causes the compressed graph convolutional network to be executed.

226. The method of any of clauses 201 to 225, further comprising configuring hardware logic to implement the compressed graph convolutional network.

227. The method according to any of clauses 201 to 226, comprising using the compressed graph convolutional network to perform one of: image processing, text processing, speech processing, traffic forecasting, lane detection, providing a recommendation to a user, molecular property prediction, prediction of a malicious user in a social network, and controlling or assisting in the control of a vehicle.

228. A processing system for compressing a graph convolutional network, the processing system comprising at least one processor configured to:

receive a graph convolutional network comprising a graph convolutional network layer, said graph convolutional network layer being arranged to perform an operation in dependence on an adjacency matrix, said adjacency matrix comprising a plurality of non-zero values and a plurality of zero values;
rearrange the rows and columns of the adjacency matrix so as to gather the plurality of non-zero values of the adjacency matrix into a set of one or more adjacency sub-matrices, the set of one or more adjacency sub-matrices having a greater average density of non-zero values than the adjacency matrix; and
output a compressed graph convolutional network comprising a compressed graph convolutional network layer arranged to perform a compressed operation in dependence on the set of one or more adjacency sub-matrices.

229. The processing system of clause 228 further comprising a memory, wherein the at least one processor is further configured to write the compressed graph convolutional network into the memory for subsequent implementation.

230. Computer readable code configured to cause the method of any of clauses 201 to 227 to be performed when the code is run.

231. A computer readable storage medium having encoded thereon computer readable code configured to cause the method of any of clauses 201 to 227 to be performed when the code is run.

**Claims**

1. A computer implemented method of configuring a graph convolutional network, the method comprising:

receiving a graph convolutional network comprising a graph convolutional network layer, said graph convolutional network layer being arranged to perform an operation in dependence on an adjacency matrix, a feature embedding matrix and a weight matrix;

determining that the weight matrix comprises: (i) more rows than columns, or (ii) more columns than rows; and in response to determining that the weight matrix comprises more rows than columns, configuring the graph convolutional network such that the graph convolutional network layer is configured to determine a first intermediate result representing a result of multiplying the feature embedding matrix and the weight matrix, and subsequently use the determined first intermediate result to determine a full result representing a result of multiplying the adjacency matrix, the feature embedding matrix and the weight matrix; or

in response to determining that the weight matrix comprises more columns than rows, configuring the graph convolutional network such that the graph convolutional network layer is configured to determine a second intermediate result representing a result of multiplying the adjacency matrix and the feature embedding matrix, and subsequently use the determined second intermediate result to determine the full result representing the result of multiplying the adjacency matrix, the feature embedding matrix and the weight matrix.

2. The method of claim 1 wherein the adjacency matrix has more elements than the feature embedding matrix and than the weight matrix, optionally wherein the adjacency matrix is a square matrix.

3. The method of any preceding claim wherein the graph convolutional network comprises a plurality of graph convolutional network layers, the plurality of graph convolutional network layers comprising said graph convolutional network layer and one or more further graph convolutional network layers,

optionally wherein the method further comprises, for each of the one or more further graph convolutional network layers:

determining that a weight matrix for the further graph convolutional network layer comprises: (i) more rows than columns, or (ii) more columns than rows; and

in response to determining that the weight matrix for the further graph convolutional network layer comprises more rows than columns, configuring the graph convolutional network such that the further graph convolutional network layer is configured to determine a first intermediate result for the further graph convolutional network layer representing a result of multiplying a feature embedding matrix for the further graph convolutional network layer and the weight matrix for the further graph convolutional network layer, and subsequently use the determined first intermediate result for the further graph convolutional network layer to determine a full result for the further graph convolutional network layer representing a result of multiplying an adjacency matrix, the feature embedding matrix and the weight matrix for the further graph convolutional network layer; or

in response to determining that the weight matrix for the further graph convolutional network layer comprises more columns than rows, configuring the graph convolutional network such that the further graph convolutional network layer is configured to determine a second intermediate result for the further graph convolutional network layer representing a result of multiplying the adjacency matrix for the further graph convolutional network layer and the feature embedding matrix for the further graph convolutional network layer, and subsequently use the determined second intermediate result for the further graph convolutional network layer to determine the full result for the further graph convolutional network layer representing the result of multiplying the adjacency matrix, the feature embedding matrix and the weight matrix for the further graph convolutional network layer.

4. The method of claim 3 wherein for at least one of the plurality of graph convolutional network layers it is determined that the weight matrix comprises more rows than columns, and wherein for at least one other one of the plurality of graph convolutional network layers it is determined that the weight matrix comprises more columns than rows.

5. The method of any of claims 3 to 4 further comprising configuring the graph convolutional network to process an output of a first of the graph convolutional network layers to determine a feature embedding matrix for a second of the graph convolutional network layers in the graph convolutional network, wherein the processing of the output of the first of the graph convolutional network layers comprises applying an activation function.

6. The method of any preceding claim wherein the adjacency matrix is represented with a set of one or more adjacency sub-matrices, wherein the feature embedding matrix is represented with a set of one or more feature embedding sub-matrices, wherein the first intermediate result is a first set of one or more intermediate sub-matrices and the second intermediate result is a second set of one or more intermediate sub-matrices, and wherein:

said configuring the graph convolutional network in response to determining that the weight matrix comprises more rows than columns is such that the graph convolutional network layer is configured to determine the first set of one or more intermediate sub-matrices by multiplying the set of one or more feature embedding sub-matrices by the weight matrix, and subsequently use the determined first set of one or more intermediate sub-matrices to determine the full result by multiplying the set of one or more adjacency sub-matrices by the first set of one or more intermediate sub-matrices; and
said configuring the graph convolutional network in response to determining that the weight matrix comprises more columns than rows is such that the graph convolutional network layer is configured to determine the second set of one or more intermediate sub-matrices by multiplying the set of one or more adjacency sub-matrices by the set of one or more feature embedding sub-matrices, and subsequently use the determined second set of one or more intermediate sub-matrices to determine the full result by multiplying the second set of one or more intermediate sub-matrices by the weight matrix.

7. The method of any of claims 1 to 5 wherein the first intermediate result is a first intermediate matrix and the second intermediate result is a second intermediate matrix, and wherein:

said configuring the graph convolutional network in response to determining that the weight matrix comprises more rows than columns is such that the graph convolutional network layer is configured to determine the first intermediate matrix by multiplying the feature embedding matrix by the weight matrix, and subsequently use the determined first intermediate matrix to determine the full result by multiplying the adjacency matrix by the first intermediate matrix; and
said configuring the graph convolutional network in response to determining that the weight matrix comprises more columns than rows is such that the graph convolutional network layer is configured to determine the second intermediate matrix by multiplying the adjacency matrix by the feature embedding matrix, and subsequently use the determined second intermediate matrix to determine the full result by multiplying the second intermediate matrix by the weight matrix.

8. A processing system for compressing a graph convolutional network, the processing system comprising at least one processor configured to:

receive a graph convolutional network comprising a graph convolutional network layer, said graph convolutional network layer being arranged to perform an operation in dependence on an adjacency matrix, said adjacency matrix comprising a plurality of non-zero values and a plurality of zero values;
rearrange the rows and columns of the adjacency matrix so as to gather the plurality of non-zero values of the adjacency matrix into a set of one or more adjacency sub-matrices, the set of one or more adjacency sub-matrices having a greater average density of non-zero values than the adjacency matrix; and
output a compressed graph convolutional network comprising a compressed graph convolutional network layer arranged to perform a compressed operation in dependence on the set of one or more adjacency sub-matrices.

9. The processing system of claim 8 wherein the graph convolutional network layer is arranged to perform an operation in dependence on the adjacency matrix, a feature embedding matrix and a weight matrix, and optionally wherein the compressed graph convolutional network layer is arranged to output a result representing a result of multiplying the adjacency matrix, the feature embedding matrix and the weight matrix.

10. The processing system of claim 9 wherein the set of one or more adjacency sub-matrices comprise a subset of the values of the adjacency matrix, and wherein:

the graph convolutional network layer of the received graph convolutional network is arranged to perform the operation by performing matrix multiplications using the adjacency matrix, the feature embedding matrix and the weight matrix; and
the compressed graph convolutional network layer of the compressed graph convolutional network is arranged to perform the compressed operation by performing matrix multiplications using the set of one or more adjacency sub-matrices, a set of one or more feature embedding sub-matrices representing the feature embedding matrix, and the weight matrix.

11. The processing system of any of claims 8 to 10 wherein, to rearrange the rows and columns of the adjacency matrix, the at least one processor is configured to:

perform permutations of the rows and of the columns of the adjacency matrix; and
partition the rows and columns of the permuted adjacency matrix to determine the set of one or more adjacency sub-matrices,
optionally wherein the at least one processor is configured to perform the permutations of the rows and of the columns of the adjacency matrix by performing a symmetric permutation, and the partitioning of the rows of the permuted adjacency matrix is the same as the partitioning of the columns of the permuted adjacency matrix.

12. The processing system of any of claims 8 to 11 wherein, to rearrange the rows and columns of the adjacency matrix, the at least one processor is configured to convert the adjacency matrix into a doubly-bordered block-diagonal matrix form which comprises: (i) a plurality of block arrays which are aligned along the diagonal of the adjacency matrix, (ii) one or more horizontal border arrays which are horizontally aligned across the adjacency matrix, and (iii) one or more vertical border arrays which are vertically aligned across the adjacency matrix, and
wherein the block arrays, the one or more horizontal border arrays and the one or more vertical border arrays are adjacency sub-matrices.

13. The processing system of any of claims 8 to 12, wherein the at least one processor is configured to rearrange the rows and columns of the adjacency matrix in dependence on a hypergraph model.

14. The processing system of any of claims 8 to 13 wherein the graph convolutional network comprises a plurality of graph convolutional network layers, the plurality of graph convolutional network layers comprising said graph convolutional network layer and one or more further graph convolutional network layers, and

wherein the compressed graph convolutional network comprises a plurality of compressed graph convolutional network layers, the plurality of compressed graph convolutional network layers comprising said compressed graph convolutional network layer and one or more further compressed graph convolutional network layers, wherein the compressed graph convolutional network is configured to process an output of a first of the compressed graph convolutional network layers to determine an input for a second of the compressed graph convolutional network layers in the compressed graph convolutional network, wherein the processing of the output of the first of the compressed graph convolutional network layers does not comprise performing a permute operation on the output of the first of the compressed graph convolutional network layers, optionally wherein the input for the second of the compressed graph convolutional network layers is a set of one or more feature embedding sub-matrices representing a feature embedding matrix for the second of the compressed graph convolutional network layers.

15. The processing system of any of claims 8 to 14 further comprising a memory, wherein the at least one processor is further configured to write the compressed graph convolutional network into the memory for subsequent implementation.

H

Graph

102

1

2

3   4

5   6

7   8

**FIGURE 1A**

| 1 |
| 2 |
| 3 |
| 4 |
| 5 |
| 6 |
| 7 |
| 8 |

**FIGURE 1B**

104

Adjacency Matrix

|   | 1 | 2 | 3 | 4 | 5 | 6 | 7 | 8 |
|---|---|---|---|---|---|---|---|---|
| 1 | 0 | 0 | 1 | 1 | 1 | 0 | 0 | 0 |
| 2 | 0 | 0 | 0 | 1 | 0 | 0 | 0 | 0 |
| 3 | 1 | 0 | 0 | 1 | 0 | 0 | 0 | 0 |
| 4 | 1 | 1 | 1 | 0 | 0 | 0 | 0 | 1 |
| 5 | 1 | 0 | 0 | 0 | 0 | 1 | 0 | 0 |
| 6 | 0 | 0 | 0 | 0 | 1 | 0 | 1 | 1 |
| 7 | 0 | 0 | 0 | 0 | 0 | 1 | 0 | 0 |
| 8 | 0 | 0 | 0 | 1 | 0 | 1 | 0 | 0 |

106

Normalised Adjacency Matrix

|   | 1 | 2 | 3 | 4 | 5 | 6 | 7 | 8 |
|---|---|---|---|---|---|---|---|---|
| 1 | 1/4 | 0 | 1/4 | 1/4 | 1/4 | 0 | 0 | 0 |
| 2 | 0 | 1/2 | 0 | 1/2 | 0 | 0 | 0 | 0 |
| 3 | 1/3 | 0 | 1/3 | 1/3 | 0 | 0 | 0 | 0 |
| 4 | 1/5 | 1/5 | 1/5 | 1/5 | 0 | 0 | 0 | 1/5 |
| 5 | 1/3 | 0 | 0 | 0 | 1/3 | 1/3 | 0 | 0 |
| 6 | 0 | 0 | 0 | 0 | 1/4 | 1/4 | 1/4 | 1/4 |
| 7 | 0 | 0 | 0 | 0 | 0 | 1/2 | 1/2 | 0 |
| 8 | 0 | 0 | 0 | 1/3 | 0 | 1/3 | 0 | 1/3 |

**FIGURE 1C**

**FIGURE 2**

**FIGURE 3**

400

404          406          402
                                     408

```
┌─────────────────────────────────────────────┐    ┌──────────────────────┐
│  ┌──────────────┐   ┌──────────────┐         │    │  ┌────────────────┐  │
│  │              │   │              │         │    │  │                │  │
│  │ Processor(s) │───│    Memory    │─────────┼────┤  │   NNA and/or   │  │
│  │              │   │              │         │    │  │      GPU       │  │
│  │              │   │              │         │    │  │                │  │
│  └──────────────┘   └──────────────┘         │    │  └────────────────┘  │
│                                              │    │                      │
│             Processing system                │    │     System for       │
│                                              │    │ implementing a GCN   │
└─────────────────────────────────────────────┘    └──────────────────────┘
```

**FIGURE 4**

```
                    ┌──────────────────────────────────────────┐
                    │              Receive a GCN               │────  S502
                    └──────────────────────────────────────────┘
  Consider the next GCN layer                    │
         ┌─────────────────────────────►─────────┤
         │                                        ▼
         │                                                      S504
         │                    ◇─────────────────────────────◇
         │            ┌──────◇  Does W for the GCN layer have ◇──────┐
         │  S506      │        ◇  more rows than columns?      ◇      │  S508
         │       Yes  │         ◇─────────────────────────────◇  No  │
         │            ▼                                               ▼
  ┌──────────────────────────────┐        ┌──────────────────────────────┐
  │  Configure the GCN layer to:  │        │  Configure the GCN layer to:  │
  │ - determine a first intermediate│      │ - determine a second intermediate│
  │   result representing HW,     │        │   result representing AH,     │
  │ - use the first intermediate result to│ │ - use the second intermediate │
  │ determine a full result representing│   │ result to determine a full result│
  │           AHW                 │        │      representing AHW          │
  └──────────────────────────────┘        └──────────────────────────────┘
         │                                                │
  ┌────────────────────┐                                  │
  │ Configure the GCN to│                                 │
  │ process the output of the│                            │
  │ GCN layer to determine H │                            │
  │    for the next layer    │                            ▼
  └────────────────────┘                    ◇─────────────────────────────◇
         │                        ┌─────────◇  Is there another GCN layer in the ◇────── S510
       S512        Yes            │          ◇   GCN to be configured?       ◇
                                  └──────────◇─────────────────────────────◇
                                                           │ No
                                                           ▼
                    ┌──────────────────────────────────────────┐
                    │  Store the GCN for subsequent implementation │──── S514
                    └──────────────────────────────────────────┘
```

**FIGURE 5**

|  | (AH)W | A(HW) |
|---|---|---|
| **Wide W** | First: A X H = AH<br>Second: AH X W = AHW | First: H X W = HW<br>Second: A X HW = AHW |
| **Tall W** | First: A X H = AH<br>Second: AH X W = A H W | First: H X W = H W<br>Second: A X H W = A H W |

**FIGURE 6**

```
┌─────────────────────────────────────────┐
│                                         │
│            Receive a GCN                │ ──〜 S702
│                                         │
└─────────────────────────────────────────┘
                    │
                    ▼
┌─────────────────────────────────────────┐
│  Re-arrange the rows and columns of the │
│  adjacency matrix to determine a set of │ ──〜 S704
│  one or more adjacency sub-matrices     │
└─────────────────────────────────────────┘
                    │
                    ▼
┌─────────────────────────────────────────┐
│  Determine a compressed GCN comprising  │
│  one or more compressed GCN layers      │
│  which are each configured to perform   │ ──〜 S706
│  a compressed operation in dependence   │
│  on the set of one or more adjacency    │
│  sub-matrices                           │
└─────────────────────────────────────────┘
                    │
                    ▼
┌─────────────────────────────────────────┐
│                                         │
│         Output the compressed GCN       │ ──〜 S708
│                                         │
└─────────────────────────────────────────┘
```

**FIGURE 7**

Adjacency Matrix

802

|   | 1 | 2 | 3 | 4 | 5 | 6 | 7 |
|---|---|---|---|---|---|---|---|
| 1 |   |   | X | X |   | X |   |
| 2 |   | X |   | X |   |   |   |
| 3 | X |   | X |   |   |   |   |
| 4 | X | X |   | X |   |   |   |
| 5 |   |   |   |   | X | X | X |
| 6 | X |   |   |   | X |   |   |
| 7 |   |   |   |   | X |   | X |

**FIGURE 8A**

806                                        804

**FIGURE 8B**

Permuted & Partitioned
Adjacency Matrix

808

|   | 2 | 3 | 4 | 5 | 7 | 1 | 6 |
|---|---|---|---|---|---|---|---|
| 2 | X |   | X |   |   |   |   |
| 3 |   | X |   |   |   | X |   |
| 4 | X |   | X |   |   | X |   |
| 5 |   |   |   | X | X |   | X |
| 7 |   |   |   | X | X |   |   |
| 1 |   | X | X |   |   |   | X |
| 6 |   |   |   | X |   | X |   |

$810_1$   $810_4$   $810_2$   $810_3$   $810_5$

**FIGURE 8C**

FIGURE 9

Receive a GCN — S1002

Re-arrange the rows and columns of the adjacency matrix to determine a set of one or more adjacency sub-matrices — S1003

Consider the next GCN layer

S1004

Does W for the GCN layer have more rows than columns?

S1006 Yes

S1008 No

Configure the compressed GCN layer to:
- multiply a set of H sub-matrices by W to determine a first set of intermediate sub-matrices,
- multiply the set of adjacency sub-matrices by the first set of intermediate sub-matrices

Configure the compressed GCN layer to:
- multiply the set of adjacency sub-matrices by the set of H sub-matrices to determine a second set of intermediate sub-matrices,
- multiply the second set of intermediate sub-matrices by W

Configure the GCN to process the output of the GCN layer to determine the set of H sub-matrices for the next layer

S1012

Is there another GCN layer in the GCN to be configured? — S1010

Yes

No

Configure the compressed GCN to permute an output of the final compressed GCN layer — S1013

Store the compressed GCN for subsequent implementation — S1014

**FIGURE 10**

FIGURE 11

EP 4 575 893 A1

**FIGURE 12**

**FIGURE 13**

Europäisches
Patentamt
European
Patent Office
Office européen
des brevets

# EUROPEAN SEARCH REPORT

**Application Number**

EP 24 22 0329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/188613 A1 (LI JIAJUN [US] ET AL) 16 June 2022 (2022-06-16) | 1-7 | INV.<br>G06N3/042 |
| A | * the whole document * | 8-15 | G06N3/0464<br>G06N3/048 |
| | ----- | | G06N3/063 |
| X | YOO MINGI ET AL: "SGCN: Exploiting Compressed-Sparse Features in Deep Graph Convolutional Network Accelerators", 2023 IEEE INTERNATIONAL SYMPOSIUM ON HIGH-PERFORMANCE COMPUTER ARCHITECTURE (HPCA), IEEE, 25 February 2023 (2023-02-25), pages 1-14, XP034315470, DOI: 10.1109/HPCA56546.2023.10071102 [retrieved on 2023-03-24] | 8-15 | |
| A | * the whole document * | 1-7 | |
| | ----- | | |
| A | NAIR GOPIKRISHNAN RAVEENDRAN ET AL: "FPGA Acceleration of GCN in Light of the Symmetry of Graph Adjacency Matrix", 2023 DESIGN, AUTOMATION & TEST IN EUROPE CONFERENCE & EXHIBITION (DATE), EDAA, 17 April 2023 (2023-04-17), pages 1-6, XP034354099, DOI: 10.23919/DATE56975.2023.10137076 [retrieved on 2023-06-02] * the whole document * | 1-15 | **TECHNICAL FIELDS SEARCHED (IPC)**<br><br>G06N |
| | ----- | | |
| A | GUNDUZ VEHBI DEMIRCI ET AL: "Scalable Graph Convolutional Network Training on Distributed-Memory Systems", ARXIV.ORG, CORNELL UNIVERSITY LIBRARY, 201 OLIN LIBRARY CORNELL UNIVERSITY ITHACA, NY 14853, 9 December 2022 (2022-12-09), XP091390438, * the whole document * | 1-15 | |
| | ----- | | |

The present search report has been drawn up for all claims

| Place of search | Date of completion of the search | Examiner |
|---|---|---|
| The Hague | 7 April 2025 | Ntarlagiannis, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                   .................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 0329

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2025

| Patent document cited in search report | Publication date | Patent family member(s) | Publication date |
|---|---|---|---|
| US 2022188613 A1 | 16-06-2022 | NONE | |

**REFERENCES CITED IN THE DESCRIPTION**

**Patent documents cited in the description**

- GB 2319567 A